# EUROPEAN PATENT SPECIFICATION

(11) **EP 2 757 461 B1**
(45) Date of publication and mention of the grant of the patent: **04.04.2018**
(21) Application number: 12805422.8
(22) Date of filing: 27.04.2012
(51) Int. Cl.: G06F 3/06, G06F 1/32, G06F 11/14, G06F 12/16

(54) **STORAGE CONTROL DEVICE, DATA ARCHIVAL STORAGE SYSTEM AND DATA ACCESS METHOD**
SPEICHERSTEUERUNGSVORRICHTUNG, DATENARCHIVIERUNGSSYSTEM SOWIE DATENZUGRIFFSVERFAHREN
DISPOSITIF DE COMMANDE DE MISE EN MÉMOIRE, SYSTÈME D'ARCHIVAGE DE DONNÉES ET PROCÉDÉ D'ACCÈS À DES DONNÉES

(43) Date of publication of application: 23.07.2014
(73) Proprietor: Huawei Technologies Co., Ltd., Longgang District Shenzhen, Guangdong 518129 (CN)
(72) Inventor: LI, Yong, Shenzhen Guangdong 518129 (CN); SHI, Youzhu, Shenzhen Guangdong 518129 (CN)
(74) Representative: Gill Jennings & Every LLP
(86) International application number: PCT/CN2012/074825
(87) International publication number: WO 2013/159337

(56) References cited:
- CN-A- 101 192 093
- CN-A- 101 582 015
- CN-A- 102 123 167
- JP-A- 2005 063 591
- US-A- 5 900 007
- US-A1- 2011 040 938
- US-B1- 7 100 013

## Description

### TECHNICAL FIELD

The present invention relates to data archive storage technologies, and in particular, to a storage control device, a data archive storage system, and a data access method.

### BACKGROUND

At present, an archive storage system is mainly implemented in the following two manners: One is an archive storage system using a hard disk; the other one is an archive storage system using a tape. Compared with the archive storage system using the tape, because the archive storage system using the hard disk allows a file management system to directly perform an access operation on a file, access efficiency is higher.

In the archive storage system using the hard disk, the file management system generally accesses a file in a manner such as a distributed file system. The file management system does not know a specific hard disk on which the distributed file system currently performs an operation, for example, does not know a specific hard disk from which data is being read or into which data is being written; therefore, it is difficult to perform massive arrays of idle disks (Massive Arrays of Idle Disks, MAID) storage or a power off control on a hard disk where an archived file is located, thereby resulting in a high archive storage cost.

US 5900007A relates to a data storage and retrieval system which includes a large number of disk drives and control mechanisms for handling data storage, data retrieval, and power consumption to achieve extremely high overall storage capacity. Particularly, it discloses that determining cluster or clusters in the system are best suited to storing the dataset and making the clusters active so that the dataset can be stored, and deactivating of the clusters 7 and 11 after receiving their data allocations based on the power constraint allows up to 4 active clusters at a time.

### SUMMARY

The present invention provides a storage control device, a data archive storage system, and a data archive access method, which are used to reduce an archive storage cost.

An embodiment of the present invention provides a storage control device as defined by claim 1. An embodiment of the present invention provides a data archive access method as defined by claim 5. In the storage control device, the data archive storage system, and the data archive access method provided by the embodiments of the present invention, the storage control device directly controls the data storage device to store and read files, and sends a hard disk control instruction to the data storage device after controlling the data storage device to write a file, so as to perform an energy saving control on a storage medium into which the file is written; and before controlling the data storage device to read a file from a storage medium, if the storage medium is in a power-off or dormant state, the storage control device may send a hard disk control instruction to the data storage device to control the data storage device to perform power on or dormancy recovery on the storage medium storing the file, so that when a storage medium is used to perform data archive storage, an energy saving control such as MAID or power off is implemented on the storage medium, and an archive storage cost is reduced.

### BRIEF DESCRIPTION OF DRAWINGS

To describe the technical solutions in embodiments of the present invention or in the prior art more clearly, the following briefly introduces accompanying drawings required for describing the embodiments or the prior art. Apparently, the accompanying drawings in the following description are merely some embodiments of the present invention, and persons of ordinary skill in the art may further obtain other drawings according to these accompanying drawings without creative efforts.
FIG. 1 is a schematic structural diagram of a storage control device according to an embodiment of the present invention;
FIG. 2 is a schematic structural diagram of a storage control device according to another embodiment of the present invention;
FIG. 3 is a schematic structural diagram of a data archive storage system according to an embodiment of the present invention;
FIG. 4 is a schematic structural diagram of a data archive storage system according to another embodiment of the present invention;
FIG. 5 is a flowchart of a data archive access method according to an embodiment of the present invention;
FIG. 6 is a flowchart of a data archive access method according to another embodiment of the present invention;
FIG. 7 is a flowchart of a data archive access method according to still another embodiment of the present invention;
FIG. 8 is a flowchart of a data archive access method according to still another embodiment of the present invention; and
FIG. 9 is a flowchart of a data archive access method according to still another embodiment of the present invention.

### DESCRIPTION OF EMBODIMENTS

To make objectives, technical solutions, and advantages of embodiments of the present invention more comprehensible, the following clearly and completely describes the technical solutions in the embodiments of the present invention with reference to the accompanying drawings in the embodiments of the present invention. Apparently, the embodiments to be described are merely part rather than all of the embodiments of the present invention. All other embodiments obtained by persons of ordinary skill in the art based on the embodiments of the present invention without creative efforts shall fall within the protection scope of the present invention.

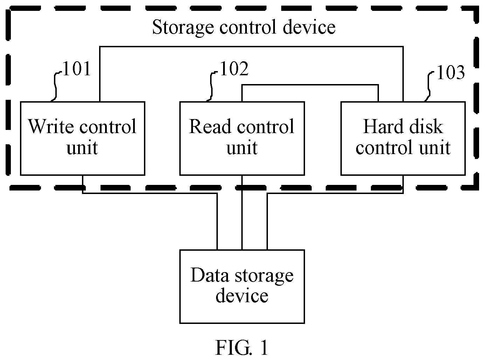

FIG. 1 is a schematic structural diagram of a storage control device according to an embodiment of the present invention. The storage control device in this embodiment is mainly configured to perform a read or write control on a data storage device, and control the data storage device to perform an energy saving control on a storage medium of the data storage device. The data storage device in this embodiment includes at least one storage medium, which is used for providing a storage space. The storage medium of the data storage device in this embodiment is a medium supporting random access of data, such as a hard disk, an optical disk, a U disk or a memory. These storage media are capable of maintaining data permanently. As shown in FIG. 1, the storage control device in this embodiment includes: a write control unit 101, a read control unit 102, and a hard disk control unit 103.

It should be noted that, in addition to the write control unit 101, the read control unit 102, and the hard disk control unit 103, the storage control device in this embodiment further includes modules such as a processor, a storage medium, various expansion cards, connection wires, and a power source.

The write control unit 101 is connected to the data storage device, and is configured to control the data storage device to write a first file into a first storage location of the data storage device. The first file is a file to be stored, and the first storage location refers to a storage space for storing the first file. By taking that the storage medium of the data storage device is a hard disk as an example, the first storage location may be a certain hard disk of the data storage device, and more specifically, the first storage location may also be a sector of a certain hard disk. Generally, the first storage location is determined by the storage control device, for example, determined by the write control unit 101 of the storage control device.

The read control unit 102 is connected to the data storage device, and is configured to obtain an identifier of a second file and storage location information of the second file, and control, according to the obtained identifier of the second file and storage location information of the second file, the data storage device to read the second file from a second storage location. The second file is a file to be read, and the second storage location refers to a storage space where the second file is located. By taking that the storage medium of the data storage device is a hard disk as an example, the second storage location may be a certain hard disk of the data storage device, and more specifically, the second storage location may also be a sector of a certain hard disk. Generally, the second storage location is determined by the storage control device when a file is stored, and more specifically, is determined by the write control unit 101 of the storage control device when the data storage device is controlled to store the second file.

The hard disk control unit 103 is connected to the write control unit 101, the read control unit 102, and the data storage device; and is configured to send a first hard disk control instruction to the data storage device, so that the data storage device performs an energy saving control on a storage medium where the first storage location is located, and send a second hard disk control instruction to the data storage device when a storage medium where the second storage location is located is in a power-off or dormant state, so as to control the data storage device to perform a power on or dormancy recovery operation on the storage medium where the second storage location is located.

For example, the performing, by the storage control device, the energy saving control on the storage medium where the first storage location is located may be, but is not limited to, performing a power off control on the storage medium where the first storage location is located, performing a dormancy control on the storage medium where the first storage location is located, performing a speed reduction control on the storage medium where the first storage location is located, performing a head suspension control on the storage medium where the first storage location is located, or performing an entire power off control on the data storage device where the storage medium is located, where the first storage location is located in the storage medium. That is to say, by sending the first hard disk control instruction to the data storage device, the storage control device may implement various energy saving control operations on a certain storage medium of the data storage device.

It should be noted that, besides sending the first hard disk control instruction or the second hard disk control instruction to the data storage device, so as to instruct the data storage device to perform the energy saving control on the storage medium where the first storage location is located or perform the power on or dormancy recovery operation on the storage medium where the second storage location is located, the hard disk control unit 103 may also send other hard disk control instructions to the data storage device, so as to instruct the data storage device to perform other controls besides energy saving, power on or dormancy recovery on the storage medium of the data storage device, for example, control the data storage device to perform a full rate control on the storage medium of the data storage device or perform an entire power on control on the data storage device where the storage medium is located.

It can be seen from the foregoing description that, the storage control device in this embodiment works in cooperation with the data storage device, and mainly provides an access control on an archived file, performs controls such as MAID and power off on the storage medium, and provides a storage management function. Because the storage control device in this embodiment may perform controls such as MAID or power off on a certain storage medium of the data storage device, compared with the prior art in which a power on or power off control can only be performed on an entire storage system, control precision is improved. In addition, the storage control device in this embodiment may perform energy saving controls such as power off, dormancy, and speed reduction on the storage medium of the data storage device, thereby facilitating energy saving, and reducing a storage control cost.

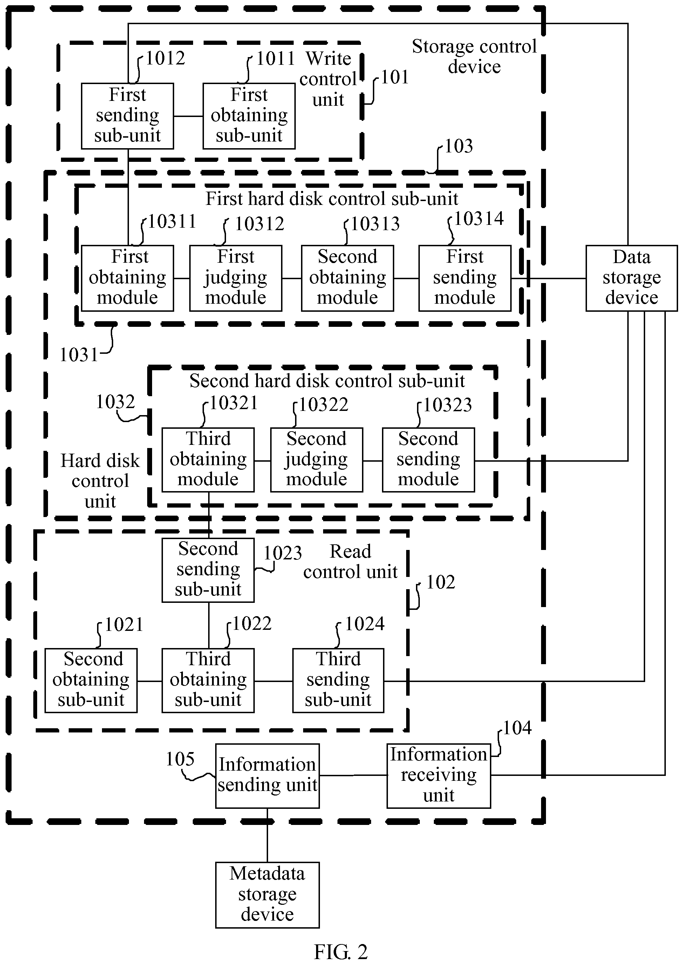

FIG. 2 is a schematic structural diagram of a storage control device according to another embodiment of the present invention. This embodiment may be implemented based on the embodiment shown in FIG. 1. As shown in FIG. 2, the hard disk control unit 103 in this embodiment includes: a first hard disk control sub-unit 1031 and a second hard disk control sub-unit 1032.

The first hard disk control sub-unit 1031 is connected to the write control unit 101 and the data storage device, and is configured to send a first hard disk control instruction to the data storage device when the storage medium where the first storage location is located meets an energy saving control condition, so that the data storage device performs the energy saving control on the storage medium where the first storage location is located, where the energy saving control condition includes at least one of the following: a storage duration of the first file in the storage medium where the first storage location is located reaches a preset storage duration threshold, the number of access times of the first file in the storage medium where the first storage location is located reaches a preset threshold of the number of access times, the storage medium where the first storage location is located is fully occupied, a waiting duration after the storage medium where the first storage location is located is fully occupied reaches a preset waiting duration threshold and a preset control period is reached.

Further, the first hard disk control sub-unit 1031 includes: a first obtaining module 10311, a first judging module 10312, a second obtaining module 10313, and a first sending module 10314.

The first obtaining module 10311 is connected to the write control unit 101, and is configured to, after the write control unit 101 controls the data storage device to write the first file into the first storage location, obtain, according to information which is of the first storage location and is provided by the write control unit 101, state information of the storage medium where the first storage location is located.

Optionally, the data storage device may report device state information to the storage control device. The device state information includes an identifier of the data storage device, and an identifier and state information of each storage medium of the data storage device. The state information of the storage medium includes information such as whether the storage medium is in a power-on state, a power-off state, or a dormant state, whether the storage medium is in a fully occupied state, and the number of access times and a storage duration of each file in the storage medium, and information such as an available storage space of the storage medium.

Optionally, the data storage device may actively report the device state information to the storage control device according to a preset period. Alternatively, the data storage device reports the device state information to the storage control device according to a state report instruction of the storage control device. For example, the storage control device may include a state information receiving unit (not shown in the figure), which is used for receiving the device state information reported by the data storage device and is responsible for storing the device state information in a certain storage space of the storage control device.

Based on the foregoing description, the first obtaining module 10311 may specifically search a storage space which is of the storage control device and stores device state information of the data storage device for the device state information, and obtain the state information of the storage medium where the first storage location is located from the device state information.

The first judging module 10312 is connected to the first obtaining module 10311, and is configured to judge, according to the state information of the storage medium where the first storage location is located, whether the storage medium where the first storage location is located meets the energy saving control condition.

The second obtaining module 10313 is connected to the first judging module 10312, and is configured to obtain an energy saving operation instruction corresponding to the energy saving control condition when a judging result of the first judging module 10312 is yes.

Optionally, the energy saving operation instruction corresponding to the energy saving control condition includes: performing a power off control on a storage medium meeting the energy saving control condition, performing a dormancy control on a storage medium meeting the energy saving control condition, performing a speed reduction control on a storage medium meeting the energy saving control condition, performing a head suspension control on a storage medium meeting the energy saving control condition, or performing an entire power off control on a data storage device where a storage medium meeting the energy saving control condition is located.

Optionally, the energy saving control condition and the energy saving operation instruction corresponding to the energy saving control condition may be used as part of information in a comprehensive archive policy and pre-stored in the storage control device.

For example, if it is set in the comprehensive archive policy that power off is performed one month after a certain file is stored, after the first obtaining module 10311 obtains the state information of the storage medium of a hard disk where the first storage location is located, the first judging module 10312 may judge whether the first file is stored for one month, and if a judging result is that the first file has been stored for one month, determine that a storage medium that stores the first file (that is, the storage medium where the first storage location is located) meets a power off control condition.

For another example, if it is set in the comprehensive archive policy that a storage medium is powered off a week after being fully occupied, after the first obtaining module 10311 obtains the state information of the storage medium where the first storage location is located, the first judging module 10312 may judge whether the storage medium where the first storage location is located is fully occupied, further judge whether the storage medium where the first storage location is located has been fully occupied for one week after judging that the storage medium where the first storage location is located is fully occupied, and determine that the storage medium where the first storage location is located meets a power off control condition when a judging result is yes.

For still another example, if it is set in the comprehensive archive policy that a certain storage medium is powered off once a month and a power-off duration is set, after the first hard disk control sub-unit 1031 controls the data storage device to write the first file into the first storage location, a timer may be started, and a timing duration of the timer is set to one month; then, the first judging module 10312 may judge whether the storage medium where the first storage location is located meets the foregoing power off control condition by judging whether timing of a timer corresponding to the storage medium where the first storage location is located is over.

The first sending module 10314 is connected to the second obtaining module 10313 and the data storage device, and is configured to send a first hard disk control instruction to the data storage device, so that the data storage device performs, on the storage medium where the first storage location is located, an energy saving control identified by the energy saving operation instruction. The first hard disk control instruction includes the energy saving operation instruction obtained by the second obtaining module 10313.

Based on the foregoing implementation structure of the first hard disk control sub-unit 1031, the write control unit 101 in this embodiment includes: a first obtaining sub-unit 1011 and a first sending sub-unit 1012.

The first obtaining sub-unit 1011 is configured to obtain the first storage location according to a storage location selection policy. The storage location selection policy includes selecting a storage location according to the device state information of the data storage device. The device state information of the data storage device includes an identifier and state information of each storage medium of the data storage device.

Optionally, the storage location selection policy is pre-stored in the storage control device, for example, stored in a certain storage medium of the storage control device. The first obtaining sub-unit 1011 needs to first obtain the storage location selection policy from the storage medium, and then determine the first storage location according to the obtained storage location selection policy. Optionally, the storage location selection policy includes, but is not limited to, selecting a storage location according to the device state information of the data storage device. The device state information includes an identifier of the data storage device, a state of the data storage device, and an identifier, state information, an available storage capacity, and a total storage capacity of each storage medium of the data storage device.

For example, the first obtaining sub-unit 1011 may determine, according to the state information and the available storage capacity of the storage medium, which storage medium is used to store the first file. The state information of the storage medium mainly includes: an unreadable state such as a power-off state, a dormant state, a damaged state, or a read unavailable state; a readable state such as a read available state or a power-on state; whether the storage medium is fully occupied; and state information of each file in the storage medium.

The first sending sub-unit 1012 is connected to the first obtaining sub-unit 1011, the hard disk control unit 103, and the data storage device; and is configured to send information which is of the first storage location and is obtained by the first obtaining sub-unit 1011 to the hard disk control unit 103, and send the information of the first storage location and the first file to the data storage device, so that the data storage device stores the first file in the first storage location according to the information of the first storage location. Based on the foregoing implementation structure of the hard disk control unit 103, the first sending sub-unit 1012 is specifically connected to the first obtaining module 10311 of the hard disk control unit 103, and is configured to provide the information of the first storage location to the first obtaining module 10311.

Optionally, there may be one or multiple data storage devices. If there are multiple data storage devices, the first obtaining sub-unit 1011 may specifically be configured to determine a first data storage device (for example, which may be the data storage device shown in FIG. 2) from the multiple data storage devices according to the storage location selection policy, and then determine a first storage location from the first data storage device. The first sending sub-unit 1012 may specifically be configured to obtain an IP address of the first data storage device according to information of the first data storage device that is determined by the first obtaining sub-unit 1011, and send, according to the IP address of the first data storage device, information of the first storage location that is determined by the first obtaining sub-unit 1011 and the first file to the first data storage device.

Correspondence between an identifier of each data storage device and an IP address of each data storage device may be preset in the storage control device, and then the first obtaining sub-unit 1011 may directly obtain the IP address of the first data storage device from the stored correspondence. In addition, the first obtaining sub-unit 1011 may further obtain the IP address of the first data storage device by querying a third-party device according to the identifier of the first data storage device. The third-party device stores correspondence between the identifier of the data storage device and the IP address of the data storage device. The third-party device may be a server storing the correspondence between the identifier of the data storage device and the IP address of the data storage device. For example, the identifier of the first data storage device is a domain name, the third-party device is a domain name system (Domain Name System, DNS) server, and a domain name and a corresponding IP address are configured in the DNS server; then, the first obtaining sub-unit 1011 may obtain the identifier of the first data storage device by querying through the DNS.

Optionally, the first obtaining sub-unit 1011 of the write control unit 101 may be further configured to obtain the first file.

Optionally, the first obtaining sub-unit 1011 may specifically receive a file archive request sent by a third-party system, and obtain a first file from the third-party system according to the file archive request. The file archive request includes an identifier of the first file and storage location information which is of the first file and is in the third-party system. The third-party system mainly refers to a system requiring file archive storage, such as an online storage system or an ordinary information technology (Information Technology, IT) system.

Further, the storage control device in this embodiment has a data transmission function externally, and supports multiple file transmission manners, such as a file transfer protocol (File Transfer Protocol, FTP), hypertext transfer protocol (Hypertext Transfer Protocol, HTTP), web-based distributed authoring and versioning (Web-based Distributed Authoring and Versioning, WebDAV), common Internet file system (Common Internet File System, CIFS), or net file system (Net File System, NFS) manner.

Based on the foregoing description, the first obtaining sub-unit 1011 may specifically obtain the first file from the third-party system according to the file archive request in an FTP, an HTTP, a WebDAV, a CIFS or an NFS manner after receiving the file archive request sent by the third-party system.

Optionally, before the first sending sub-unit 1012 sends the first file to the data storage device, the write control unit 101 may process the first file according to the comprehensive control policy. For example, the write control unit 101 may include a processing sub-unit (not shown in the figure), and the processing sub-unit processes the first file according to the comprehensive control policy.

The comprehensive control policy may be pre-configured in the storage control device, for example, stored in a certain storage medium of the storage control device, and the comprehensive control policy in this embodiment may be further set or modified through a configuration. The processing sub-unit needs to first obtain the comprehensive control policy from the storage medium, and then process the first file according to the obtained comprehensive control policy.

The comprehensive control policy in this embodiment may include, but is not limited to, at least one of the following: whether to perform digital watermark processing on the first file, whether to perform encryption processing on the first file, whether to perform a completeness check on the first file, whether to perform file segmentation on the first file and to store the first file according to a fragment file after the segmentation, and whether to perform copy backup on the first file and to store the first file and a copy file of the first file at the same time. Different policies may be preset for different types of files, for example, if a file size exceeds a certain threshold, file segmentation is performed; and digital watermark processing is performed on all video files.

As an implementation manner, if it can be judged, according to the comprehensive control policy, that no processing needs to be performed on the first file, the storage control device may not buffer the first file, and the first sending sub-unit 1012 directly sends the first file to the data storage device. In addition, if it is judged, according to the comprehensive control policy, that processing needs to be performed on the first file, the storage control device may first buffer the first file, the processing sub-unit processes the first file, and then the first sending sub-unit 1012 sends the first file processed by the processing sub-unit to the data storage device.

For example, if the comprehensive control policy includes performing segmentation on the first file and storing the first file according to the fragment file after the segmentation, the processing sub-unit may specifically be configured to segment the first file, and allocate an identifier for each fragment file after the segmentation; the first obtaining sub-unit 1011 may specifically be configured to obtain, according to the storage location selection policy, a first storage location for each fragment file that is obtained through segmenting by the processing sub-unit; and the second sending sub-unit 1012 may specifically be configured to send, to the data storage device, information of the first storage location that corresponds to each fragment file and is obtained by the first obtaining sub-unit 1011 and each fragment file that is obtained through segmenting by the processing sub-unit, so that the data storage device stores, according to the information of the first storage location corresponding to each fragment file, each fragment file in the first storage location corresponding to each fragment file.

For example, if the comprehensive control policy includes performing copy backup on the first file and storing the first file and the copy file of the first file at the same time, the processing sub-unit may specifically be configured to perform copy backup on the first file obtained by the first obtaining sub-unit 1011, and allocate an identifier for each copy file; the first obtaining sub-unit 1011 may specifically be configured to obtain, according to the storage location selection policy, a corresponding first storage location for the first file and each copy file that is obtained through backing up by the processing sub-unit; the second sending sub-unit 1012 may specifically be configured to send, to the data storage device, information of the first storage location that corresponds to the first file and is obtained by the first obtaining sub-unit 1011 and the first file, and information of the first storage location that corresponds to each copy file and is obtained by the first obtaining sub-unit 1011 and each copy file that is obtained through backing up by the processing sub-unit, so that the data storage device stores, according to the information of the first storage location corresponding to the first file, the first file in the first storage location corresponding to the first file, and stores, according to the information of the first storage location corresponding to each copy file, each copy file in the first storage location corresponding to each copy file.

The second hard disk control sub-unit 1032 is connected to the read control unit 102 and the data storage device, and is configured to send a second hard disk control instruction to the data storage device when the storage medium where the second storage location is located is in a power-off or dormant state, so as to control the data storage device to perform a power on or dormancy recovery operation on the storage medium where the second storage location is located, and control the data storage device to read a second file from the second storage location.

Further, the second hard disk control sub-unit 1032 includes: a third obtaining module 10321, a second judging module 10322, and a second sending module 10323.

The third obtaining module 10321 is connected to the read control unit 102, and is configured to, before the read control unit 102 controls the data storage device to read the second file from the second storage location, obtain, according to information which is of the second storage location and is provided by the read control unit 102, state information of the storage medium where the second storage location is located.

Optionally, the third obtaining module 10321 may specifically search the storage space which is of the storage control device and stores the device state information of the data storage device for the device state information, and obtain the state information of the storage medium where the second storage location is located from the device state information.

The second judging module 10322 is connected to the third obtaining module 10321, and is configured to judge, according to the state information which is of the storage medium where the second storage location is located and is obtained by the third obtaining module 10321, whether the storage medium where the second storage location is located is in a power-off or dormant state. The state information which is of the storage medium where the second location is located and is obtained by the third obtaining module 10321 includes: information indicating whether the storage medium where the second location is located is in a power-off or dormant state; therefore, the second judging module 10322 may directly judge whether the storage medium where the second storage location is located is in a power-off or dormant state.

The second sending module 10323 is connected to the second judging module 10322 and the data storage device, and is configured to send a second hard disk control instruction to the data storage device when a judging result of the second judging module 10322 is yes, so as to control the data storage device to perform a power on or dormancy recovery operation on the storage medium where the second storage location is located.

Based on the foregoing implementation structure of the second hard disk control sub-unit 1032, the read control unit 102 in this embodiment includes: a second obtaining sub-unit 1021, a third obtaining sub-unit 1022, a second sending sub-unit 1023, and a third sending sub-unit 1024.

The second obtaining sub-unit 1021 is configured to obtain an identifier of the second file. Optionally, the second obtaining sub-unit 1021 may receive a file read request sent by the third-party system, and obtain the identifier of the second file from the file read request. The file read request includes the identifier of the second file.

Optionally, if the second obtaining sub-unit 1021 obtains the identifier of the second file from the file read request sent by the third-party system, when judging that the storage medium where the second storage location is located is in a damaged state or a read available state in an unreadable state, the read control unit 102 in this embodiment may further send, to the third-party system, a response indicating that the file is unavailable.

The third obtaining sub-unit 1022 is connected to the second obtaining sub-unit 1021, and is configured to search file metadata according to the identifier which is of the second file and is obtained by the second obtaining sub-unit 1021, so as to obtain storage location information of the second file. The file metadata includes the identifier and the storage location information that are of the file and are stored by the data storage device, and the storage location information of the second file includes information of the data storage device and information of the second storage location. The information of the data storage device may be any information that may uniquely identify the data storage device, such as an IP address, an MAC address and a name of the data storage device. Likewise, information of a storage location of a file, where the information of the storage location of the file is in the data storage device, may also be any information that may uniquely identify the storage location. By taking that the storage medium of the data storage device is a hard disk as an example, the information of the storage location of the file, where the information of the storage location of the file is in the data storage device, may be an identifier of the hard disk, to which this embodiment is not limited.

Optionally, the file metadata may be stored in a metadata storage device. The third obtaining sub-unit 1022 may query the metadata device for the file metadata according to the identifier of the second file, so as to obtain information of the second storage location.

The second sending sub-unit 1023 is connected to the third obtaining sub-unit 1022 and the hard disk control unit 103, and is configured to send the information which is of the second storage location and is obtained by the third obtaining sub-unit 1022 to the hard disk control unit 103. Based on the foregoing implementation structure of the hard disk control unit 103 and the foregoing implementation structure of the second hard disk control sub-unit 1032, the second sending sub-unit 1023 is connected to the third obtaining module 10321 of the second hard disk control sub-unit 1032, and is configured to provide the information of the second storage location to the third obtaining module 10321.

The third sending sub-unit 1024 is connected to the third obtaining sub-unit 1022 and the data storage device, and is configured to, when the storage medium where the second storage location is located is in a power-on state, or after the data storage device performs, according to the second hard disk control instruction, the power on or dormancy recovery operation on the storage medium where the second storage location is located, send the information of the second storage location to the data storage device according to the information of the data storage device, so that the data storage device reads the second file from the second storage location.

For example, if the information of the data storage device is the identifier of the data storage device and the information of the second storage location is an identifier of a certain hard disk of the data storage device, the third sending sub-unit 1024 may obtain an IP address of the data storage device according to the identifier of the data storage device, and then send the identifier of the hard disk to the data storage device according to the IP address of the data storage device. For the data storage device, a corresponding hard disk may be found according to the identifier of the hard disk, and then the second file may be read from the hard disk.

Optionally, the storage control device in this embodiment may further include: an information receiving unit 104 and/or an information sending unit 105.

The information receiving unit 104 is connected to the data storage device, and is configured to receive an identifier and storage location information that are of each file and are stored and reported by the data storage device, where the storage location information of each file includes the information of the data storage device and information of a storage location of each file, where the information of the storage location of each file is in the data storage device.

The information sending unit 105 is connected to the information receiving unit 104 and the metadata storage device, and is configured to send, to the metadata storage device, the identifier and the storage location information that are of each file and are received by the information receiving unit 104, so that the metadata storage device recovers the file metadata.

The information receiving unit 104 may specifically be configured to receive the identifier and the storage location information that are of each file and are stored and actively reported by the data storage device when the data storage device is started, or
the information receiving unit 104 may specifically be configured to send a metadata report instruction to the data storage device, so as to instruct the data storage device to report the identifier and the storage location information that are of each file and are stored by the data storage device, and then receive the identifier and the storage location information that are of each file and are stored and reported by the data storage device.

The storage control device in this embodiment may re-obtain, through the information receiving unit 104 and the information sending unit 105 and from the data storage device, the identifier and the storage location information that are of each file in a case that the file metadata in the metadata storage device is lost or damaged, and provide the metadata storage device with the re-obtained identifier and storage location information that are of each file, so that the metadata storage device may recover the file metadata, thereby ensuring reliability of the file metadata.

The storage control device in this embodiment may directly control, through each unit or sub-unit, the data storage device to store and read files, and send a hard disk control instruction to the data storage device after controlling the data storage device to write a file, so as to perform an energy saving control on a storage medium into which the file is written; and before controlling the data storage device to read a file from a storage medium, if the storage medium is in a power-off or dormant state, the storage control device may send a hard disk control instruction to the data storage device to control the data storage device to perform power on or dormancy recovery on the storage medium storing the file, so that when a storage medium is used to perform data archive storage, an energy saving control such as MAID or power off is implemented on the storage medium, and an archive storage cost is reduced.

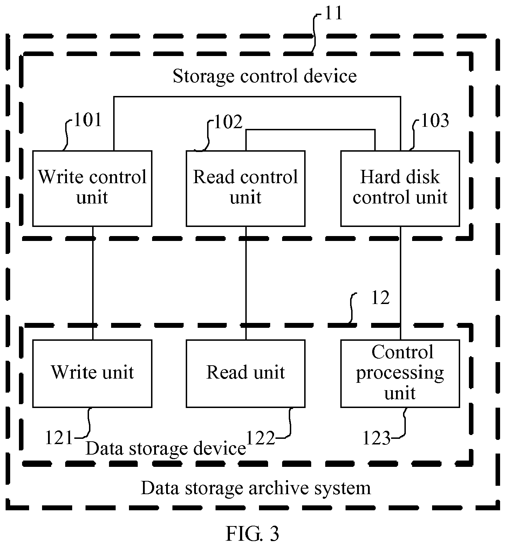

FIG. 3 is a schematic structural diagram of a data archive storage system according to an embodiment of the present invention. As shown in FIG. 3, the system in this embodiment includes: a storage control device 11 and a data storage device 12. The storage control device 11 is connected to the data storage device 12.

The data storage device 12 includes at least one storage medium, which is used for providing a storage space, where the storage medium is a medium supporting random access of data, and may be, for example, a hard disk, a U disk, a memory, or an optical disk. These storage media are capable of maintaining data permanently. In specific implementation, the data storage device 12 may be a storage server or another storage device having several storage media. The data storage device 12 in this embodiment supports controls such as power off or MAID on the storage medium. Optionally, the data storage device 12 in this embodiment may further support online capacity expansion.

The storage control device 11 mainly performs an access control on an archived file, performs controls such as MAID and power off on the storage medium of the data storage device, and provides a storage management function.

Specifically, the storage control device 11 in this embodiment includes: a write control unit 101, a read control unit 102, and a hard disk control unit 103. The data storage device 12 in this embodiment includes: a write unit 121, a read unit 122, and a control processing unit 123.

It should be noted that, in addition to the write control unit 101, the read control unit 102, and the hard disk control unit 103, the storage control device 11 in this embodiment further includes modules such as a processor, a storage medium, various expansion cards, connection wires, and a power source. In addition to the write unit 121, the read unit 122, and the control processing unit 123, the data storage device 12 in this embodiment further includes modules such as a processor, various expansion cards, connection wires, and a power source.

The write control unit 101 is connected to the writ unit 121, and is configured to control the data storage device 12 to write a first file into a first storage location of the data storage device 12, and is more specifically configured to control the write unit 121 to write the first file into the first storage location of the data storage location 12. The first file is a file to be stored, and the first storage location refers to a storage space for storing the first file. By taking that the storage medium of the data storage device 12 is a hard disk as an example, the first storage location may be a certain hard disk of the data storage device 12, and more specifically, the first storage location may also be a sector of a certain hard disk. Generally, the first storage location is determined by the storage control device 11, and more specifically, determined by the write control unit 101 of the storage control device 11.

Correspondingly, the write unit 121 in this embodiment is configured to write the first file into the first storage location under the control of the storage control device 11, and more specifically, write the first file into the first storage location under the control of the write control unit 101, so as to implement file archive storage. For example, the write unit 121 may write the first file into the first storage location through a file system of the data storage device 12.

The read control unit 102 in this embodiment is connected to the read unit 122, and is configured to obtain an identifier of a second file and storage location information of the second file, and control, according to the obtained identifier of the second file and storage location information of the second file, the data storage device to read the second file from a second storage location. The second file is a file to be read, and the second storage location refers to a storage space where the second file is located. By taking that the storage medium of the data storage device is a hard disk as an example, the second storage location may be a certain hard disk of the data storage device, and more specifically, the second storage location may also be a sector of a certain hard disk. Generally, the second storage location is determined by the storage control device when a file is stored, and more specifically, is determined by the write control unit 101 of the storage control device when the data storage device is controlled to store the second file.

Correspondingly, the read unit 122 in this embodiment is configured to read the second file from the second storage location under the control of the storage control device 11, and more specifically, read the second file from the second storage location under the control of the read control unit 102, so as to implement reading of the archived file. For example, the read unit 122 may read the second file from the second storage location through the file system of the data storage device 12.

The hard disk control unit 103 in this embodiment is connected to the write control unit 101, the read control unit 102, and the control processing unit 123; and is configured to send a first hard disk control instruction to the data storage device, so that the data storage device performs an energy saving control on a storage medium where the first storage location is located, and send a second hard disk control instruction to the data storage device when a storage medium where the second storage location is located is in a power-off or dormant state, so as to control the data storage device to perform a power on or dormancy recovery operation on the storage medium where the second storage location is located.

For example, the performing, by the storage control device, the energy saving control on the storage medium where the first storage location is located may be, but is not limited to, performing a power off control on the storage medium where the first storage location is located, performing a dormancy control on the storage medium where the first storage location is located, performing a speed reduction control on the storage medium where the first storage location is located, performing a head suspension control on the storage medium where the first storage location is located, or performing an entire power off control on the data storage device where the storage medium is located, where the first storage location is located in the storage medium. That is to say, by sending the first hard disk control instruction to the data storage device, the storage control device may implement various energy saving control operations on a certain storage medium of the data storage device.

It should be noted that, besides sending the first hard disk control instruction or the second hard disk control instruction to the data storage device, so as to instruct the data storage device to perform the energy saving control on the storage medium where the first storage location is located or perform the power on or dormancy recovery operation on the storage medium where the second storage location is located, the hard disk control unit 103 may also send other hard disk control instructions to the data storage device, so as to instruct the data storage device to perform other controls besides energy saving, power on or dormancy recovery on the storage medium of the data storage device, for example, control the data storage device to perform a full rate control on the storage medium of the data storage device or perform an entire power on control on the data storage device where the storage medium is located.

Correspondingly, the control processing unit 123 in this embodiment is configured to receive the first hard disk control instruction sent by the hard disk control unit 103, perform, according to the first hard disk control instruction, an energy saving control on the storage medium where the first storage location is located, receive the second hard disk control instruction sent by the hard disk control unit 103, and perform, according to the second hard disk control instruction, a power on or dormancy recovery operation on the storage medium where the second storage location is located. In the data storage archive system in this embodiment, the storage control device works in cooperation with the data storage device, and mainly provides an access control on the archived file, performs controls such as MAID and power off on the storage medium, and provides a storage management function. Because the storage control device in the system in this embodiment may perform controls such as MAID or power off on a certain storage medium of the data storage device, compared with the prior art in which a power on or power off control can only be performed on an entire storage system, control precision is improved. In addition, the storage control device in the system in this embodiment may perform energy saving controls such as power off, dormancy, and speed reduction on the storage medium of the data storage device, thereby facilitating energy saving, and reducing a storage control cost.

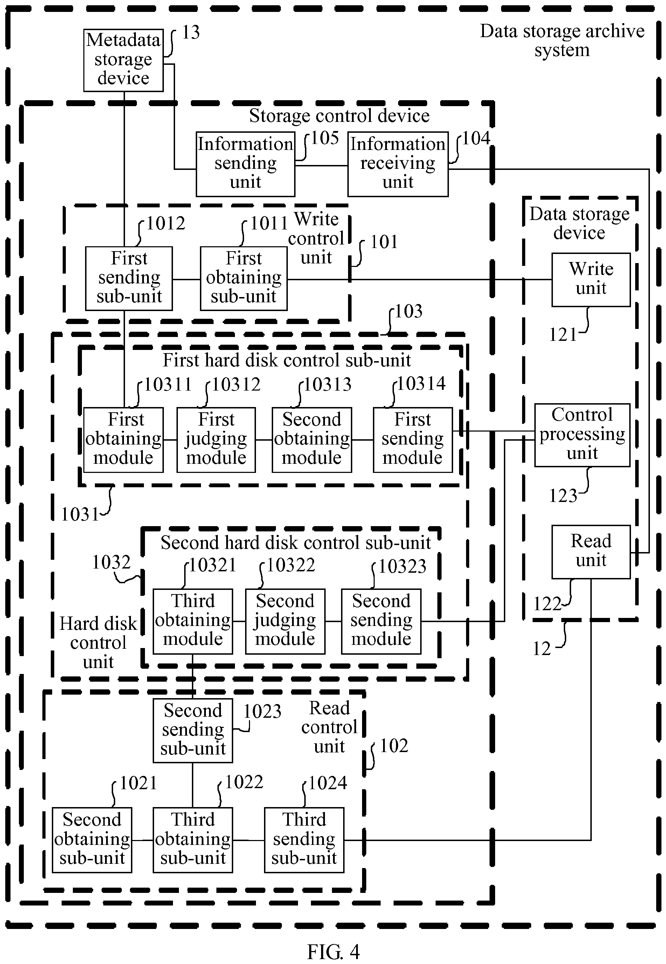

FIG. 4 is a schematic structural diagram of a data archive storage system according to another embodiment of the present invention. This embodiment is implemented based on the foregoing embodiment. As shown in FIG. 4, the hard disk control unit 103 in this embodiment includes: a first hard disk control sub-unit 1031 and a second hard disk control sub-unit 1032.

The first hard disk control sub-unit 1031 is connected to the write control unit 101 and the control processing unit 123, and is configured to send a first hard disk control instruction to the control processing unit 123 of the data storage device 12 when the storage medium where the first storage location is located meets an energy saving control condition, so that the control processing unit 123 of the data storage device 12 performs the energy saving control on the storage medium where the first storage location is located, where the energy saving control condition includes at least one of the following: a storage duration of the first file in the storage medium where the first storage location is located reaches a preset storage duration threshold, the number of access times of the first file in the storage medium where the first storage location is located reaches a preset threshold of the number of access times, the storage medium where the first storage location is located is fully occupied, a waiting duration after the storage medium where the first storage location is located is fully occupied reaches a preset waiting duration threshold and a preset control period is reached. Further, the first hard disk control sub-unit 1031 includes: a first obtaining module 10311, a first judging module 10312, a second obtaining module 10313, and a first sending module 10314.

The first obtaining module 10311 is connected to the write control unit 101, and is configured to, after the write control unit 101 controls the write unit 121 of the data storage device 12 to write the first file into the first storage location, obtain, according to information which is of the first storage location and is provided by the write control unit 101, state information of the storage medium where the first storage location is located.

Optionally, the data storage device 12 may report device state information to the storage control device 11. The device state information includes an identifier of the data storage device 12, an identifier and state information of each storage medium of the data storage device 12. The state information of the storage medium includes information such as whether the storage medium is in a power-on state, a power-off state, or a dormant state, whether the storage medium is in a fully occupied state, and the number of access times and a storage duration of each file in the storage medium, and information such as an available storage space of the storage medium.

Optionally, the data storage device 12 may actively report the device state information to the storage control device 11 according to a preset period. Alternatively, the data storage device 12 reports the device state information to the storage control device 11 according to a state report instruction of the storage control device 11. For example, the storage control device 12 may include a state information receiving unit (not shown in the figure), which is used for receiving the device state information reported by the data storage device 11 and is responsible for storing the device state information in a certain storage space of the storage control device 11.

Based on the foregoing description, the first obtaining module 10311 may specifically search a storage space which is of the storage control device 11 and stores device state information of the data storage device 12 for the device state information, and obtain the state information of the storage medium where the first storage location is located from the device state information.

The first judging module 10312 is connected to the first obtaining module 10311, and is configured to judge, according to the state information of the storage medium where the first storage location is located, whether the storage medium where the first storage location is located meets the energy saving control condition.

The second obtaining module 10313 is connected to the first judging module 10312, and is configured to obtain an energy saving operation instruction corresponding to the energy saving control condition when a judging result of the first judging module 10312 is yes.

Optionally, the energy saving operation instruction corresponding to the energy saving control condition includes: performing a power off control on a storage medium meeting the energy saving control condition, performing a dormancy control on a storage medium meeting the energy saving control condition, performing a speed reduction control on a storage medium meeting the energy saving control condition, performing a head suspension control on a storage medium meeting the energy saving control condition, or performing an entire power off control on a data storage device where a storage medium meeting the energy saving control condition is located.

Optionally, the energy saving control condition and the energy saving operation instruction corresponding to the energy saving control condition may be used as part of information in a comprehensive archive policy and pre-stored in the storage control device.

For example, if it is set in the comprehensive archive policy that power off is performed one month after a certain file is stored, after the first obtaining module 10311 obtains the state information of the storage medium of a hard disk where the first storage location is located, the first judging module 10312 may judge whether the first file is stored for one month, and if a judging result is that the first file has been stored for one month, determine that a storage medium that stores the first file (that is, the storage medium where the first storage location is located) meets a power off control condition.

For another example, if it is set in the comprehensive archive policy that a storage medium is powered off a week after being fully occupied, after the first obtaining module 10311 obtains the state information of the storage medium where the first storage location is located, the first judging module 10312 may judge whether the storage medium where the first storage location is located is fully occupied, further judge whether the storage medium where the first storage location is located has been fully occupied for one week after judging that the storage medium where the first storage location is located is fully occupied, and determine that the storage medium where the first storage location is located meets a power off control condition when a judging result is yes.

For still another example, if it is set in the comprehensive archive policy that a certain storage medium is powered off once a month and a power-off duration is set, after the first hard disk control sub-unit 1031 controls the data storage device to write the first file into the first storage location, a timer may be started, and a timing duration of the timer is set to one month; then, the first judging module 10312 may judge whether the storage medium where the first storage location is located meets the foregoing power off control condition by judging whether timing of a timer corresponding to the storage medium where the first storage location is located is over.

The first sending module 10314 is connected to the second obtaining module 10313 and the control processing unit 123 of the data storage device 12, and is configured to send a first hard disk control instruction to the control processing unit 123 of the data storage device 12, so that the control processing unit 123 of the data storage device performs, on the storage medium where the first storage location is located, an energy saving control identified by the energy saving operation instruction. The first hard disk control instruction includes the energy saving operation instruction obtained by the second obtaining module 10313.

Based on the foregoing implementation structure of the first hard disk control sub-unit 1031, the write control unit 101 in this embodiment includes: a first obtaining sub-unit 1011 and a first sending sub-unit 1012.

The first obtaining sub-unit 1011 is configured to obtain the first storage location according to a storage location selection policy. The storage location selection policy includes selecting a storage location according to the device state information of the data storage device 12. The device state information of the data storage device 12 includes an identifier and state information of each storage medium of the data storage device 12.

Optionally, the storage location selection policy is pre-stored in the storage control device 11, for example, stored in a certain storage medium of the storage control device 11. The first obtaining sub-unit 1011 needs to first obtain the storage location selection policy from the storage medium, and then determine the first storage location according to the obtained storage location selection policy. Optionally, the storage location selection policy includes, but is not limited to, selecting a storage location according to the device state information of the data storage device 12. The device state information includes an identifier of the data storage device 12, a state of the data storage device 12, and an identifier, state information, an available storage capacity, and a total storage capacity of each storage medium of the data storage device 12.

For example, the first obtaining sub-unit 1011 may determine, according to the state information and the available storage capacity of the storage medium, which storage medium is used to store the first file. The state information of the storage medium mainly includes: an unreadable state such as a power-off state, a dormant state, a damaged state, or a read unavailable state; a readable state such as a read available state or a power-on state; whether the storage medium is fully occupied; and state information of each file in the storage medium.

The first sending sub-unit 1012 is connected to the first obtaining sub-unit 1011, the hard disk control unit 103, and the write unit 121 of the data storage device 12; and is configured to send information which is of the first storage location and is obtained by the first obtaining sub-unit 1011 to the hard disk control unit 103, and send the information of the first storage location and the first file to the write unit 121 of the data storage device 12, so that the write unit 121 of the data storage device 12 stores the first file in the first storage location according to the information of the first storage location. Based on the foregoing implementation structure of the hard disk control unit 103, the first sending sub-unit 1012 is specifically connected to the first obtaining module 10311 of the hard disk control unit 103, and is configured to provide the information of the first storage location to the first obtaining module 10311.

Optionally, there may be one or multiple data storage devices 12. If there are multiple data storage devices 12, the first obtaining sub-unit 1011 may specifically be configured to determine a first data storage device (for example, which may be the data storage device 12 shown in FIG. 2) from the multiple data storage devices 12 according to the storage location selection policy, and then determine a first storage location from the first data storage device. The first sending sub-unit 1012 may specifically be configured to obtain an IP address of the first data storage device according to information of the first data storage device that is determined by the first obtaining sub-unit 1011, and send, according to the IP address of the first data storage device, information of the first storage location that is determined by the first obtaining sub-unit 1011 and the first file to the first data storage device.

Correspondence between an identifier of each data storage device 12 and an IP address of each data storage device may be preset in the storage control device, and then the first obtaining sub-unit 1011 may directly obtain the IP address of the first data storage device from the stored correspondence. In addition, the first obtaining sub-unit 1011 may further obtain the IP address of the first data storage device by querying a third-party device according to the identifier of the first data storage device. The third-party device stores correspondence between the identifier of the data storage device 12 and the IP address of the data storage device 12. The third-party device may be a server storing the correspondence between the identifier of the data storage device 12 and the IP address of the data storage device 12. For example, the identifier of the first data storage device is a domain name, the third-party device is a domain name system (Domain Name System, DNS) server, and a domain name and a corresponding IP address are configured in the DNS server; then, the first obtaining sub-unit 1011 may obtain the identifier of the first data storage device by querying through the DNS.

Optionally, the first obtaining sub-unit 1011 of the write control unit 101 may be further configured to obtain the first file.

Optionally, the first obtaining sub-unit 1011 may specifically receive a file archive request sent by a third-party system, and obtain a first file from the third-party system according to the file archive request. The file archive request includes an identifier of the first file and storage location information which is of the first file and is in the third-party system. The third-party system mainly refers to a system requiring file archive storage, such as an online storage system or an ordinary information technology (Information Technology, IT) system.

Further, the storage control device 11 in this embodiment has a data transmission function externally, and supports multiple file transmission manners, such as an FTP, an HTTP, a WebDAV, a CIFS or an NFS manner.

Based on the foregoing description, the first obtaining sub-unit 1011 may specifically obtain the first file from the third-party system according to the file archive request in an FTP, an HTTP, a WebDAV, a CIFS or an NFS manner after receiving the file archive request sent by the third-party system.

Optionally, before the first sending sub-unit 1012 sends the first file to the write unit 121 of the data storage device 12, the write control unit 101 may process the first file according to the comprehensive control policy. For example, the write control unit 101 may include a processing sub-unit (not shown in the figure), and the processing sub-unit processes the first file according to the comprehensive control policy.

The comprehensive control policy may be pre-configured in the storage control device 11, for example, stored in a certain storage medium of the storage control device 11, and the comprehensive control policy in this embodiment may be further set or modified through a configuration. The processing sub-unit needs to first obtain the comprehensive control policy from the storage medium, and then process the first file according to the obtained comprehensive control policy.

The comprehensive control policy in this embodiment may include, but is not limited to, at least one of the following: whether to perform digital watermark processing on the first file, whether to perform encryption processing on the first file, whether to perform a completeness check on the first file, whether to perform file segmentation on the first file and to store the first file according to a fragment file after the segmentation, and whether to perform copy backup on the first file and to store the first file and a copy file of the first file at the same time. Different policies may be preset for different types of files, for example, if a file size exceeds a certain threshold, file segmentation is performed; and digital watermark processing is performed on all video files.

As an implementation manner, if it can be judged, according to the comprehensive control policy, that no processing needs to be performed on the first file, the storage control device 11 may not buffer the first file, and the first sending sub-unit 1012 directly sends the first file to the data storage device. In addition, if it is judged, according to the comprehensive control policy, that processing needs to be performed on the first file, the storage control device 11 may first buffer the first file, the processing sub-unit processes the first file, and then the first sending sub-unit 1012 sends the first file processed by the processing sub-unit to the data storage device.

For example, if the comprehensive control policy includes performing segmentation on the first file and storing the first file according to the fragment file after the segmentation, the processing sub-unit may specifically be configured to segment the first file, and allocate an identifier for each fragment file after the segmentation; the first obtaining sub-unit 1011 may specifically be configured to obtain, according to the storage location selection policy, a first storage location for each fragment file that is obtained through segmenting by the processing sub-unit; and the second sending sub-unit 1012 may specifically be configured to send, to the write unit 121 of the data storage device 12, information of the first storage location that corresponds to each fragment file and is obtained by the first obtaining sub-unit 1011 and each fragment file that is obtained through segmenting by the processing sub-unit, so that the write unit 121 of the data storage device 12 stores, according to the information of the first storage location corresponding to each fragment file, each fragment file in the first storage location corresponding to each fragment file.

For example, if the comprehensive control policy includes performing copy backup on the first file and storing the first file and the copy file of the first file at the same time, the processing sub-unit may specifically be configured to perform copy backup on the first file obtained by the first obtaining sub-unit 1011, and allocate an identifier for each copy file; the first obtaining sub-unit 1011 may specifically be configured to obtain, according to the storage location selection policy, a corresponding first storage location for the first file and each copy file that is obtained through backing up by the processing sub-unit; the second sending sub-unit 1012 may specifically be configured to send, to the write unit 121 of the data storage device 12, information of the first storage location that corresponds to the first file and is obtained by the first obtaining sub-unit 1011 and the first file, and information of the first storage location that corresponds to each copy file and is obtained by the first obtaining sub-unit 1011 and each copy file that is obtained through backing up by the processing sub-unit, so that the write unit 121 of the data storage device 12 stores, according to the information of the first storage location corresponding to the first file, the first file in the first storage location corresponding to the first file, and stores, according to the information of the first storage location corresponding to each copy file, each copy file in the first storage location corresponding to each copy file.

The second hard disk control sub-unit 1032 is connected to the read control unit 102 and the data storage device, and is configured to send a second hard disk control instruction to the control processing unit 123 of the data storage device 12 when the storage medium where the second storage location is located is in a power-off or dormant state, so as to control the control processing unit 123 of the data storage device to perform a power on or dormancy recovery operation on the storage medium where the second storage location is located, and control the read unit 122 of the data storage device 12 to read a second file from the second storage location.

Further, the second hard disk control sub-unit 1032 includes: a third obtaining module 10321, a second judging module 10322, and a second sending module 10323.

The third obtaining module 10321 is connected to the read control unit 102, and is configured to, before the read control unit 102 controls the read unit 122 of the data storage device to read the second file from the second storage location, obtain, according to information which is of the second storage location and is provided by the read control unit 102, state information of the storage medium where the second storage location is located.

Optionally, the third obtaining module 10321 may search the storage space which is of the storage control device 11 and stores the device state information of the data storage device 12 for the device state information, and obtain the state information of the storage medium where the second storage location is located from the device state information.

The second judging module 10322 is connected to the third obtaining module 10321, and is configured to judge, according to the state information which is of the storage medium where the second storage location is located and is obtained by the third obtaining module 10321, whether the storage medium where the second storage location is located is in a power-off or dormant state. The state information which is of the storage medium where the second location is located and is obtained by the third obtaining module 10321 includes: information indicating whether the storage medium where the second location is located is in a power-off or dormant state; therefore, the second judging module 10322 may directly judge whether the storage medium where the second storage location is located is in a power-off or dormant state.

The second sending module 10323 is connected to the second judging module 10322 and the control processing unit 123 of the data storage device 12, and is configured to send the second hard disk control instruction to the control processing unit 123 of the data storage device 12 when a judging result of the second judging module 10322 is yes, so as to control the control processing unit 123 of the data storage device to perform a power on or dormancy recovery operation on the storage medium where the second storage location is located.

Based on the foregoing implementation structure of the second hard disk control sub-unit 1032, the read control unit 102 in this embodiment includes: a second obtaining sub-unit 1021, a third obtaining sub-unit 1022, a second sending sub-unit 1023, and a third sending sub-unit 1024.

The second obtaining sub-unit 1021 is configured to obtain an identifier of the second file.

Optionally, the second obtaining sub-unit 1021 may receive a file read request sent by the third-party system, and obtain the identifier of the second file from the file read request. The file read request includes the identifier of the second file.

Optionally, if the second obtaining sub-unit 1021 obtains the identifier of the second file from the file read request sent by the third-party system, when judging that the storage medium where the second storage location is located is in a damaged state or a read available state in an unreadable state, the read control unit 102 in this embodiment may further send, to the third-party system, a response indicating that the file is unavailable.

The third obtaining sub-unit 1022 is connected to the second obtaining sub-unit 1021, and is configured to search file metadata according to the identifier which is of the second file and is obtained by the second obtaining sub-unit 1021, so as to obtain storage location information of the second file. The file metadata includes the identifier and the storage location information that are of the file and are stored by the data storage device 12, and the storage location information of the second file includes information of the data storage device 12 and information of the second storage location.

The information of the data storage device 12 may be any information that may uniquely identify the data storage device 12, such as an IP address, an MAC address and a name of the data storage device. Likewise, information of a storage location of a file, where the information of the storage location of the file is in the data storage device 12, may also be any information that may uniquely identify the storage location. By taking that the storage medium of the data storage device 12 is a hard disk as an example, the information of the storage location of the file, where the information of the storage location of the file is in the data storage device 12, may be an identifier of the hard disk, to which this embodiment is not limited.

Optionally, the system in this embodiment may further include a metadata storage device 13.

Based on this, the file metadata may be stored in the metadata storage device 13. The third obtaining sub-unit 1022 may query the metadata storage device 13 for the file metadata according to the identifier of the second file, so as to obtain information of the second storage location. Optionally, the third obtaining sub-unit 1022 is connected to the metadata storage device 13.

The second sending sub-unit 1023 is connected to the third obtaining sub-unit 1022 and the hard disk control unit 103, and is configured to send the information which is of the second storage location and is obtained by the third obtaining sub-unit 1022 to the hard disk control unit 103. Based on the foregoing implementation structure of the hard disk control unit 103 and the foregoing implementation structure of the second hard disk control sub-unit 1032, the second sending sub-unit 1023 is connected to the third obtaining module 10321 of the second hard disk control sub-unit 1032, and is configured to provide the information of the second storage location to the third obtaining module 10321.

The third sending sub-unit 1024 is connected to the third obtaining sub-unit 1022 and the read unit 122 of the data storage device 12, and is configured to, when the storage medium where the second storage location is located is in a power-on state, or after the control processing unit 123 of the data storage device 12 performs, according to the second hard disk control instruction, a power on or dormancy recovery operation on the storage medium where the second storage location is located, send the information of the second storage location to the read control unit 122 of the data storage device 12 according to the information of the data storage device 12, so that the read unit 122 of the data storage device 12 reads the second file from the second storage location.

For example, if the information of the data storage device 12 is the identifier of the data storage device 12 and the information of the second storage location is an identifier of a certain hard disk of the data storage device 12, the third sending sub-unit 1024 may obtain an IP address of the data storage device according to the identifier of the data storage device 12, and then send the identifier of the hard disk to the read unit 122 of the data storage device 12 according to the IP address of the data storage device 12. For the read unit 122 of the data storage device 12, a corresponding hard disk may be found according to the identifier of the hard disk, and then the second file may be read from the hard disk.

Optionally, the storage control device 11 in this embodiment may further include: an information receiving unit 104 and/or an information sending unit 105.

The information receiving unit 104 is connected to the data storage device 12, and is configured to receive an identifier and storage location information that are of each file and are stored and reported by the data storage device 12, where the storage location information of each file includes information of the data storage device 12 and information of a storage location of each file, where the information of the storage location of each file is in the data storage device 12. Specifically, the information receiving unit 104 is connected to the read unit 122 of the data storage device 12.

The information sending unit 105 is connected to the information receiving unit 104 and the metadata storage device 13, and is configured to send, to the metadata storage device 13, the identifier and the storage location information that are of each file and are received by the information receiving unit 104, so that the metadata storage device 13 recovers the file metadata. The information receiving unit 104 may specifically be configured to receive the identifier and the storage location information that are of each file and are stored and actively reported by the data storage device 12 when the data storage device 12 is started, or
the information receiving unit 104 may specifically be configured to send a metadata report instruction to the data storage device 12, so as to instruct the data storage device 12 to report the identifier and the storage location information that are of each file and are stored by the data storage device 12, and then receive the identifier and the storage location information that are of each file and are stored and reported by the data storage device 12.

The storage control device 11 in this embodiment may re-obtain, through the information receiving unit 104 and the information sending unit 105 and from the data storage device 12, the identifier and the storage location information that are of each file in a case that the file metadata in the metadata storage device 13 is lost or damaged, and provide the metadata storage device 13 with the re-obtained identifier and storage location information that are of each file, so that the metadata storage device 13 may recover the file metadata, thereby ensuring reliability of the file metadata.

In the data archive storage system in this embodiment, the storage control device may directly control, through each unit or sub-unit, the data storage device to store and read files, and send a hard disk control instruction to the data storage device after controlling the data storage device to write a file, so as to perform an energy saving control on a storage medium into which the file is written; and before controlling the data storage device to read a file from a storage medium, if the storage medium is in a power-off or dormant state, the storage control device may send a hard disk control instruction to the data storage device to control the data storage device to perform power on or dormancy recovery on the storage medium storing the file, so that when a storage medium is used to perform data archive storage, an energy saving control such as MAID or power off is implemented on the storage medium, and an archive storage cost is reduced.

It should be noted that, the storage control device 11 in the foregoing embodiment may be an independent device, and may also be deployed on the data storage device 12 or the metadata storage device 13. That is, the storage control device 11 and the data storage device 12 may be a same device, or the storage control device 11 and the metadata storage device 13 are a same device.

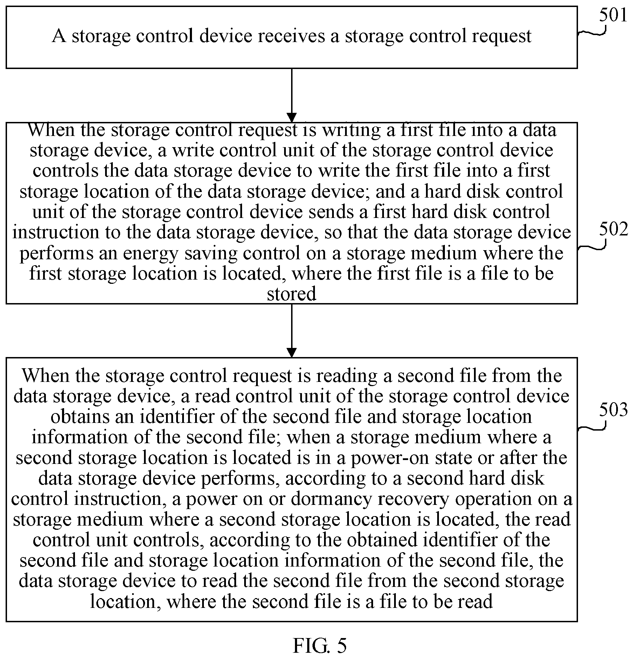

FIG. 5 is a flowchart of a data archive access method according to an embodiment of the present invention. As shown in FIG. 5A, the method in this embodiment includes:
Step 501: A storage control device receives a storage control request.

The storage control device may receive a storage control request input by a user through a manner such as a keyboard, a mouse, or a touch screen. Alternatively, the storage control device may also receive a storage control request sent by another device, and the another device may be any device having an information sending function, for example, a terminal device of the user, such as a cell phone or a personal computer.

Step 502: When the storage control request is writing a first file into a data storage device, a write control unit of the storage control device controls the data storage device to write the first file into a first storage location of the data storage device; and a hard disk control unit of the storage control device sends a first hard disk control instruction to the data storage device, so that the data storage device performs an energy saving control on a storage medium where the first storage location is located, where the first file is a file to be stored.

The data storage device includes at least one storage medium, which is used for providing a storage space, where the storage medium is a medium supporting random access of data, and may be, for example, a hard disk, a U disk, a memory, or an optical disk. These storage media are capable of maintaining data permanently.

Step 503: When the storage control request is reading a second file from the data storage device, a read control unit of the storage control device obtains an identifier of the second file and storage location information of the second file; when a storage medium where a second storage location is located is in a power-on state or after the data storage device performs, according to a second hard disk control instruction, a power on or dormancy recovery operation on a storage medium where a second storage location is located, the read control unit controls, according to the obtained identifier of the second file and storage location information of the second file, the data storage device to read the second file from the second storage location, where the second file is a file to be read.

The storage control device in this embodiment may be the storage control device in the embodiment shown in FIG. 1, FIG. 2, FIG. 3, or FIG. 4. For processes in which the storage control device controls, through each functional unit of the storage control device, the data storage device to store the first file, to read the second file, to perform an energy saving control on the storage medium where the first storage location is located, and to perform a power on or dormancy recovery operation on the storage medium where the second storage location is located, reference may be made to the description in the embodiment shown in FIG. 1, FIG. 2, FIG. 3, or FIG. 4, and details are not repeatedly described here.

In this embodiment, the storage control device works in cooperation with the data storage device, and mainly provides an access control on an archived file, performs controls such as MAID and power off on the storage medium, and provides a storage management function. Because the storage control device in this embodiment may perform controls such as MAID or power off on a certain storage medium of the data storage device, compared with the prior art in which a power on or power off control can only be performed on an entire storage system, control precision is improved. In addition, the storage control device in this embodiment may perform energy saving controls such as power off, dormancy, and speed reduction on the storage medium of the data storage device, thereby facilitating energy saving, and reducing a storage control cost.

Optionally, an implementation manner of sending, by the hard disk control unit of the storage control device, a first hard disk control instruction to the data storage device, so that the data storage device performs an energy saving control on the storage medium where the first storage location is located includes:
when the storage medium where the first storage location is located meets an energy saving control condition, sending, by the hard disk control unit, the first hard disk control instruction to the data storage device, so that the data storage device performs an energy saving control on the storage medium where the first storage location is located.

The energy saving control condition includes at least one of the following: a storage duration of the first file in the storage medium where the first storage location is located reaches a preset storage duration threshold, the number of access times of the first file in the storage medium where the first storage location is located reaches a preset threshold of the number of access times, the storage medium where the first storage location is located is fully occupied, a waiting duration after the storage medium where the first storage location is located is fully occupied reaches a preset waiting duration threshold and a preset control period is reached.

Further, an implementation manner of sending, by the hard disk control unit, the first hard disk control instruction to the data storage device when the storage medium where the first storage location is located meets an energy saving control condition, so that the data storage device performs an energy saving control on the storage medium where the first storage location is located includes:
after the write control unit controls the data storage device to write the first file into the first storage location, obtaining, by the hard disk control unit and according to information which is of the first storage location and is provided by the write control unit, state information of the storage medium where the first storage location is located;
judging, by the hard disk control unit and according to the state information of the storage medium where the first storage location is located, whether the storage medium where the first storage location is located meets the energy saving control condition; and
when a judging result is yes, obtaining, by the hard disk control unit, an energy saving operation instruction corresponding to the energy saving control condition, sending the first hard disk control instruction to the data storage device, so that the data storage device performs, on the storage medium where the first storage location is located, an energy saving control identified by the energy saving operation instruction, where the first hard disk control instruction includes the energy saving operation instruction.

The energy saving operation instruction corresponding to the energy saving control condition includes: performing a power off control on a storage medium meeting the energy saving control condition, performing a dormancy control on a storage medium meeting the energy saving control condition, performing a speed reduction control on a storage medium meeting the energy saving control condition, performing a head suspension control on a storage medium meeting the energy saving control condition, or performing an entire power off control on a data storage device where a storage medium meeting the energy saving control condition is located.

Optionally, an implementation manner of controlling, by the write control unit of the storage control device, the data storage device to write the first file into the first storage location of the data storage device includes:
obtaining, by the write control unit, the first storage location according to a storage location selection policy; where the storage location selection policy includes selecting a storage location according to device state information of the data storage device, and the device state information of the data storage device includes an identifier and state information of each storage medium of the data storage device; and
sending, by the write control unit, information of the first storage location to the hard disk control unit, and sending the information of the first storage location and the first file to the data storage device, so that the data storage device stores the first file in the first storage location according to the information of the first storage location.

Optionally, an implementation manner of obtaining, by the read control unit of the storage control device, the identifier of the second file and the storage location information of the second file includes:
obtaining, by the read control unit, an identifier of the second file;
searching, by the read control unit, file metadata according to the identifier of the second file, and obtaining storage location information of the second file, where the file metadata includes an identifier and storage location information that are of the file and are stored by the data storage device, and the storage location information of the second file includes information of the data storage device and information of the second storage location; and
sending, by the read control unit, the information of the second storage location to the hard disk control unit, so that the hard disk control unit obtains, according to the information of the second storage location, state information of the storage medium where the second storage location is located.

Optionally, the method in this embodiment further includes: before the read control unit controls the data storage device to read the second file from the second storage location, the hard disk control unit obtains, according to information which is of the second storage location and is provided by the read control unit, state information of the storage medium where the second storage location is located;
judging, by the hard disk control unit and according to the state information of the storage medium where the second storage location is located, whether the storage medium where the second storage location is located is in a power-off or dormant state; and
when the storage medium where the second storage location is located is in a power-off or dormant state, sending, by the hard disk control unit, a second hard disk control instruction to the data storage device, so as to control the data storage device to perform a power on or dormancy recovery operation on the storage medium where the second storage location is located, thereby enabling the read control unit to successfully control the data storage device to read the second file from the second storage location.

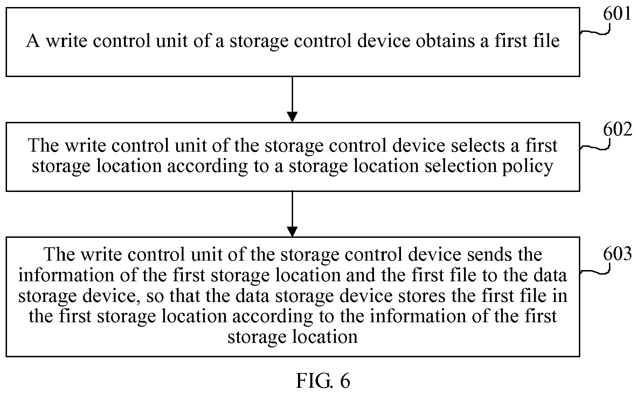

FIG. 6 is a flowchart of a data archive access method according to another embodiment of the present invention. As shown in FIG. 6, the method in this embodiment includes:
Step 601: A write control unit of a storage control device obtains a first file.

The first file is a file to be stored.

Optionally, the write unit of the storage control device may receive a file archive request sent by a third-party system, and obtain the first file from the third-party system according to the file archive request. The file archive request includes an identifier of the first file and storage location information which is of the first file and is in the third-party system. The third-party system mainly refers to a system requiring file archive storage, such as an online storage system or an ordinary IT system.

Step 602: The write control unit of the storage control device selects a first storage location according to a storage location selection policy.

The storage location selection policy may include selecting a storage location according to device state information of a data storage device. The device state information of the data storage device may include: an identifier of the data storage device, and an identifier and state information of each storage medium of the data storage device. The state information of the storage medium includes: whether the storage medium is in a power-off, a dormant, a power-on, a damaged and unavailable, or an unreadable state; may also include: an available storage capacity and a total storage capacity of the storage medium; and may further include: file information in the storage medium. The data storage device in this embodiment includes at least one storage medium, which is used as an archive storage space.

Step 603: The write control unit of the storage control device sends the information of the first storage location and the first file to the data storage device, so that the data storage device stores the first file in the first storage location according to the information of the first storage location.

The storage control device in this embodiment may be the storage control device in the embodiment shown in FIG. 1, FIG. 2, FIG. 3, or FIG. 4. For a process in which the write control unit of the storage control device stores the first file, reference may be made to the description in the embodiment shown in FIG. 1, FIG. 2, FIG. 3 or FIG. 4, and details are not repeatedly described here. In this embodiment, the storage control device directly works in cooperation with the data storage device, so as to implement file archive storage.

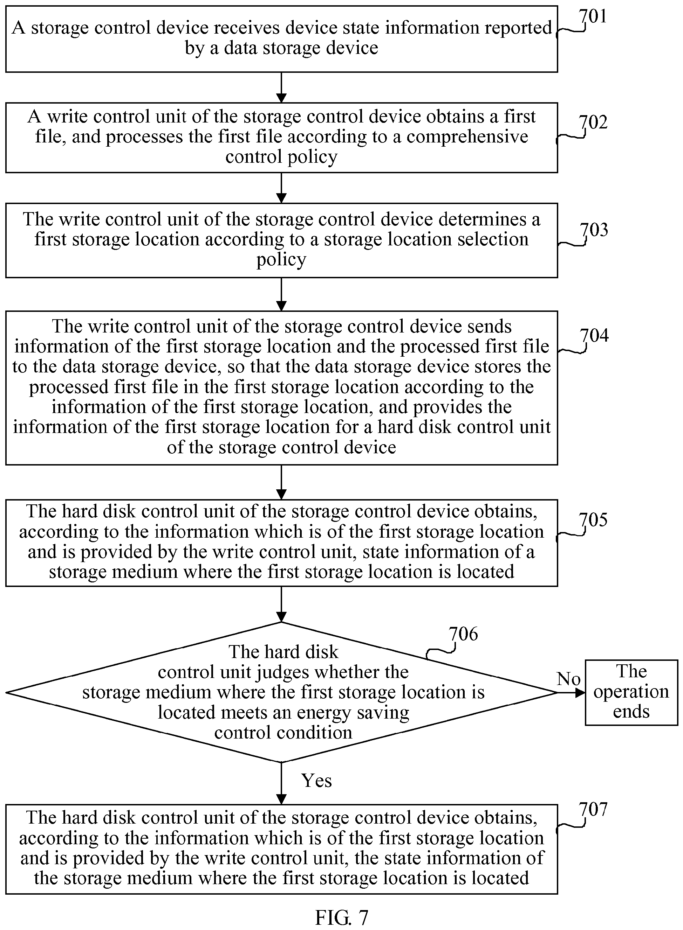

FIG. 7 is a flowchart of a data archive access method according to still another embodiment of the present invention. As shown in FIG. 7, the method in this embodiment includes:
Step 701: A storage control device receives device state information reported by a data storage device.

Optionally, the storage control device may receive device state information periodically reported by the data storage device.

Optionally, the storage control device sends a state report instruction to the data storage device, and receives the device state information reported by the data storage device according to the state report instruction.

The device state information of the data storage device may include: an identifier of the data storage device, and an identifier and state information of each storage medium of the data storage device. The state information of the storage medium includes: whether the storage medium is in a power-off, a dormant, a power-on, a damaged and unavailable, or an unreadable state; may also include: an available storage capacity and a total storage capacity of the storage medium; and may further include: file information in the storage medium. The data storage device in this embodiment includes at least one storage medium, which is used as an archive storage space.

Step 701 is an optional step.

Step 702: A write control unit of the storage control device obtains a first file, and processes the first file according to a comprehensive control policy.

Optionally, the write control unit of the storage control device may receive a file archive request sent by a third-party system, and obtain the first file from the third-party system according to the file archive request. The file archive request includes an identifier of the first file and storage location information which is of the first file and is in the third-party system. The third-party system mainly refers to a system requiring file archive storage, such as an online storage system or an ordinary IT system.

The comprehensive control policy may include, but is not limited to, at least one or a combination of the following: whether to perform digital watermark processing on the first file, whether to perform encryption processing on the first file, whether to perform a completeness check on the first file, whether to perform file segmentation on the first file and to store the first file according to a fragment file after the segmentation, and whether to perform copy backup on the first file and to store the first file and a copy file of the first file at the same time.

Optionally, if the comprehensive control policy includes performing segmentation on the first file and storing the first file according to the fragment file after the segmentation, the processing performed by the write control unit of the storage control device on the first file includes performing segmentation on the first file and allocating an identifier for each fragment file after the segmentation.

Optionally, if the comprehensive control policy includes performing copy backup on the first file and storing the first file and the copy file of the first file at the same time, the processing performed by the write control unit of the storage control device on the first file includes performing copy backup on the first file and allocating an identifier for each copy file.

Step 703: The write control unit of the storage control device determines a first storage location according to a storage location selection policy.

The storage location selection policy may include selecting a storage location according to device state information of the data storage device. The device state information of the data storage device may include: an identifier of the data storage device, and an identifier and state information of each storage medium of the data storage device. The state information of the storage medium includes: whether the storage medium is in a power-off, a dormant, a power-on, a damaged and unavailable, or an unreadable state; may also include: an available storage capacity and a total storage capacity of the storage medium; and may further include: file information in the storage medium. Optionally, if the comprehensive control policy includes performing segmentation on the first file and storing the first file according to the fragment file after the segmentation, the determining, by the write control unit of the storage control device, the first storage location includes: determining the first storage location for each fragment file according to the location selection policy. Optionally, if the comprehensive control policy includes performing copy backup on the first file and storing the first file and the copy file of the first file at the same time, the determining, by the write control unit of the storage control device, the first storage location includes: determining the first storage location for the first file and each copy file according to the location selection policy. Step 704: The write control unit of the storage control device sends information of the first storage location and the processed first file to the data storage device, so that the data storage device stores the processed first file in the first storage location according to the information of the first storage location, and provides the information of the first storage location to a hard disk control unit of the storage control device.

Optionally, if the comprehensive control policy includes performing segmentation on the first file and storing the first file according to the fragment file after the segmentation, the sending, by the write control unit of the storage control device, the first file and the information of the first storage location to the data storage device includes: sending the information of the first storage location corresponding to each fragment file and each fragment file to the data storage device.

Optionally, if the comprehensive control policy includes performing copy backup on the first file and storing the first file and the copy file of the first file at the same time, the sending, by the write control unit of the storage control device, the first file and the information of the first storage location to the data storage device includes: sending the information of the first storage location corresponding to the first file and the first file, and the information of the first storage location corresponding to each copy file and each copy file to the data storage device.

Step 705: The hard disk control unit of the storage control device obtains, according to the information which is of the first storage location and is provided by the write control unit, state information of a storage medium where the first storage location is located.

Step 706: The hard disk control unit judges, according to the state information of the storage medium where the first storage location is located, whether the storage medium where the first storage location is located meets an energy saving control condition; when a judging result is yes, that is, the storage medium where the first storage location is located meets the energy saving control condition, step 707 is executed; otherwise, the operation ends.

Step 707: The hard disk control unit obtains an energy saving operation instruction corresponding to the energy saving control condition, and sends a first hard disk control instruction to the data storage device, so that the data storage device performs, on the storage medium where the first storage location is located, an energy saving control identified by the energy saving operation instruction in the first hard disk control instruction, and the first hard disk control instruction includes the energy saving operation instruction performed on the storage medium where the first storage location is located.

The storage control device in this embodiment may be the storage control device in the embodiment shown in FIG. 1, FIG. 2, FIG. 3, or FIG. 4. For processes in which the write control unit of the storage control device stores the first file and the hard disk control unit performs an energy saving control on the storage medium storing the first file, reference may be made to the description in the embodiment shown in FIG. 1, FIG. 2, FIG. 3 or FIG. 4, and details are not repeatedly described here. In this embodiment, the storage control device directly works in cooperation with the data storage device, so as to implement file archive storage.

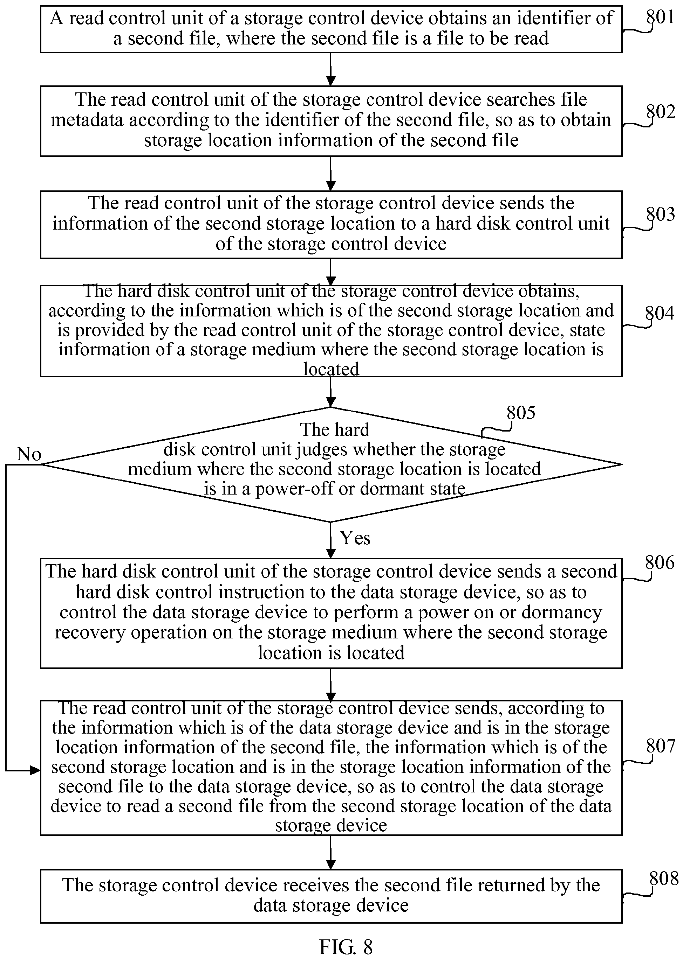

FIG. 8 is a flowchart of a data archive access method according to still another embodiment of the present invention. As shown in FIG. 8, the method in this embodiment includes:
Step 801: A read control unit of a storage control device obtains an identifier of a second file, where the second file is a file to be read.

Optionally, the read control unit of the storage control device may receive a file read request sent by a third-party system, and obtain the identifier of the second file from the file read request. The file read request includes the identifier of the second file.

Based on this, the data archive reading method in this embodiment further includes: after obtaining the second file, sending, by the read control unit of the storage control device, the second file to the third-party system.

Step 802: The read control unit of the storage control device searches file metadata according to the identifier of the second file, so as to obtain storage location information of the second file.

The file metadata includes the identifier and the storage location information that are of the file and are stored by the data storage device, and the storage location information of the second file includes information of the data storage device and information of the second storage location.

Step 803: The read control unit of the storage control device sends the information of the second storage location to a hard disk control unit of the storage control device.

Step 804: The hard disk control unit of the storage control device obtains, according to the information which is of the second storage location and is provided by the read control unit of the storage control device, state information of a storage medium where the second storage location is located.

Step 805: The hard disk control unit of the storage control device judges, according to the state information of the storage medium where the second storage location is located, whether the storage medium where the second storage location is located is in a power-off or dormant state; when a judging result is yes, step 806 is executed; otherwise, step 807 is executed.

Step 806: The hard disk control unit of the storage control device sends a second hard disk control instruction to the data storage device, so as to control the data storage device to perform a power on or dormancy recovery operation on the storage medium where the second storage location is located; then step 807 is executed.

Step 807: The read control unit of the storage control device sends, according to the information which is of the data storage device and is in the storage location information of the second file, the information which is of the second storage location and is in the storage location information of the second file to the data storage device, so as to control the data storage device to read a second file from the second storage location of the data storage device.

Step 808: The storage control device receives the second file returned by the data storage device.

The storage control device in this embodiment may be the storage control device in the embodiment shown in FIG. 1 or FIG. 2. For processes in which the read control unit of the storage control device reads the second file and the hard disk control unit of the storage control device controls the data storage device to perform a power on or dormancy recovery operation on a power-off or dormant storage medium, reference may be made to the description in the embodiment shown in FIG. 1, FIG. 2, FIG. 3 or FIG. 4, and details are not repeatedly described here.

In this embodiment, the storage control device directly works in cooperation with the data storage device, so that the data storage device reads the second file, thereby implementing reading of an archived file.

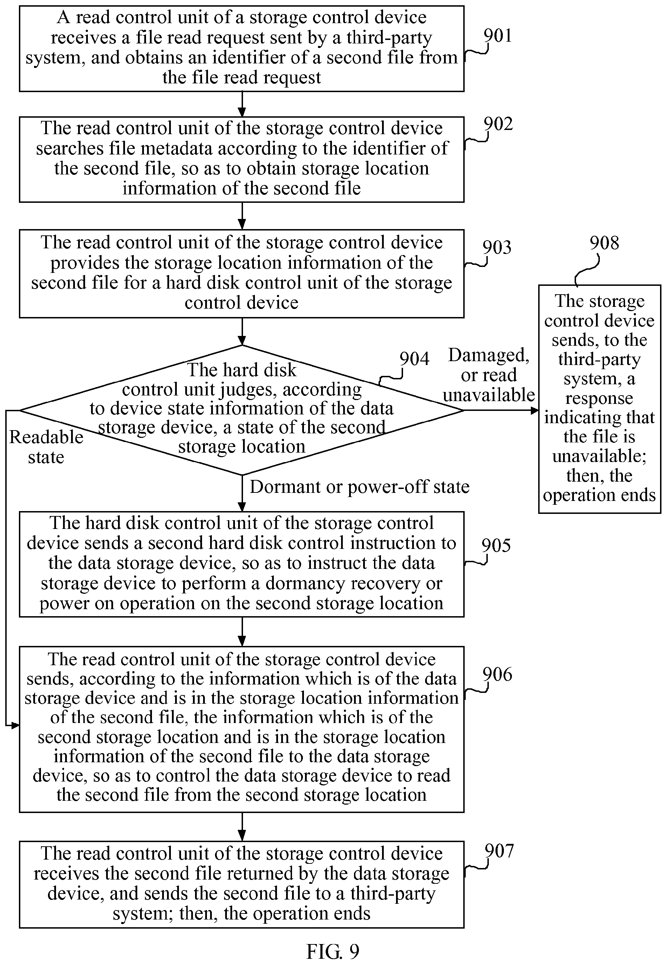

FIG. 9 is a flowchart of a data archive access method according to still another embodiment of the present invention. As shown in FIG. 9, the method in this embodiment includes:
Step 901: A read control unit of a storage control device receives a file read request sent by a third-party system, and obtains an identifier of a second file from the file read request.

The file read request includes an identifier of the second file, and the second file is a file to be read. Step 902: The read control unit of the storage control device searches file metadata according to the identifier of the second file, so as to obtain storage location information of the second file.

The storage location information of the second file includes information of the data storage device and information of a second storage location.

Optionally, the file metadata in this embodiment may be stored in a metadata storage device.

Step 903: The read control unit of the storage control device provides the storage location information of the second file for a hard disk control unit of the storage control device.

Step 904: The hard disk control unit of the storage control device judges, according to device state information of the data storage device, a state of the second storage location; when a judging result is that the second storage location is in a dormant state or a power-off state of an unreadable state, step 905 is executed; when a judging result is that the second storage location is in a readable state, step 906 is executed; when a judging result is that the second storage location is in a damaged state or a read unavailable state, step 908 is executed.

Step 905: The hard disk control unit of the storage control device sends a second hard disk control instruction to the data storage device, so as to instruct the data storage device to perform a dormancy recovery or power on operation on the second storage location; then step 906 is executed. Step 906: The read control unit of the storage control device sends, according to the information which is of the data storage device and is in the storage location information of the second file, the information which is of the second storage location and is in the storage location information of the second file to the data storage device, so as to control the data storage device to read the second file from the second storage location; then, step 907 is executed.

Step 907: The read control unit of the storage control device receives the second file returned by the data storage device, and sends the second file to a third-party system; then, the operation ends. Optionally, the storage control device may further send the second file to the third-party system. Step 908: The storage control device sends, to the third-party system, a response indicating that the file is unavailable; then, the operation ends.

The storage control device in this embodiment may be the storage control device in the embodiment shown in FIG. 1, FIG. 2, FIG. 3, or FIG. 4. For processes in which the read control unit of the storage control device reads the second file and the hard disk control unit performs a power on or dormancy recovery operation on a power-off or dormant storage medium, reference may be made to the description in the embodiment shown in FIG. 1, FIG. 2, FIG. 3 or FIG. 4, and details are not repeatedly described here.

In this embodiment, the storage control device directly works in cooperation with the data storage device, so that the data storage device reads the second file, thereby implementing reading of an archived file.

Further, in the foregoing embodiments, the storage control device may receive an identifier and storage location information that are of each file and are stored and reported by the data storage device, and send, to the metadata storage device, the identifier and the storage location information that are of each file and are reported by the data storage device, so that the metadata storage device recovers the file metadata.

The storage location information of each file includes the information of the data storage device and information of a storage location of each file, where the information of the storage location of each file is in the data storage device.

Optionally, the storage control device receives the identifier and the storage location information that are of each file and are stored and actively reported by the data storage device when the data storage device is started.

Optionally, the storage control device sends a metadata report instruction to the data storage device, receives the identifier and the storage location information that are of each file and are stored and reported, according to the metadata report instruction, by the data storage device.

It should be noted that, an execution sequence of this operation and other steps is not limited.

In this embodiment, the storage control device directly works in cooperation with the data storage device, may obtain, from the data storage device, the identifier and the storage location information that are of each file and are stored by the data storage device in a case that the file metadata is lost or damaged, and then provide the information for the metadata storage device, so that the metadata storage device recovers the file metadata, thereby ensuring security and reliability of the file metadata, and further providing an assurance for successful reading or access of an archived file.

It should be noted that, in the data archive access method provided by the embodiments shown in FIG. 5 to FIG. 9, a process of storing the first file and a process of reading the second file may be independently executed. That is, a process in which the storage control device controls the data storage device to store the file and a process in which the storage control device controls the data storage device to read the file may be performed in a parallel manner.

Persons of ordinary skill in the art may understand that all or part of the steps of the foregoing method embodiments may be implemented by a program instructing relevant hardware. The program may be stored in a computer readable storage medium. When the program is run, the steps of the foregoing method embodiments are performed. The storage medium may be any medium capable of storing program codes, such as a ROM, a RAM, a magnetic disk, or an optical disk. Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments, or make equivalent replacements to part or all of the technical features of the technical solutions described in the foregoing embodiments; however these modifications or replacements do not make the essence of the corresponding technical solutions depart from the scope of the technical solutions of the embodiments of the present invention.

## Claims

1. A data archive storage system comprising: a storage control device (11) and a data storage device (12),
wherein the storage control device (11) comprises:
a write control unit (101), configured to control a data storage device (12) to write a first file into a first storage location of the data storage device (12), wherein the first file is a file to be stored, the data storage device (12) comprises at least one storage medium, and the at least one storage medium is a medium supporting random access of data; and
a read control unit (102), configured to obtain an identifier of a second file and storage location information of the second file, and control, according to the obtained identifier of the second file and storage location information of the second file, the data storage device (12) to read the second file from a second storage location, wherein the second file is a file to be read;
wherein, the data storage device (12) comprises:
a write unit (121), configured to write the first file into the first storage location under the control of the write control unit (101); and
a read unit (122), configured to read the second file from the second storage location under the control of the read control unit (102); wherein the storage control device (11) further comprises:
a hard disk control unit (103), wherein the hard disk control unit (103) comprises:
a first hard disk control sub-unit (1031), configured to, when the storage medium where the first storage location is located meets an energy saving control condition, send a first hard disk control instruction to the data storage device (12), so that the data storage device performs an energy saving control on a storage medium where the first storage location is located; and
a second hard disk control sub-unit (1032), configured to, when the storage medium where the second storage location is located is in a power-off or dormant state, send a second hard disk control instruction to the data storage device (12) when a storage medium where the second storage location is located is in a power-off or dormant state, so as to control the data storage device (12) to perform a power on or dormancy recovery operation on the storage medium where the second storage location is located; and
the data storage device (12) further comprises:
a control processing unit (123), configured to:
receive the first hard disk control instruction, and perform, according to the first hard disk control instruction, an energy saving control on the storage medium where the first storage location is located, and
receive the second hard disk control instruction, and perform, according to the second hard disk control instruction, an energy saving operation such as the power on or dormancy recovery operation on the storage medium where the second storage location is located,
**characterised in that**:
the energy saving control condition comprise at least one of the following: a storage duration of the first file in the storage medium where the first storage location is located reaches a preset storage duration threshold, a number of access times of the first file in the storage medium where the first storage location is located reaches a preset threshold of the number of access times, a waiting duration after the storage medium where the first storage location is located is fully occupied reaches a preset waiting duration threshold and a preset control period is reached.

2. The data archive storage system according to claim 1, wherein the first hard disk control sub-unit (1031) comprises:
a first obtaining module (10311), configured to, after the write control unit controls the data storage device to write the first file into the first storage location, obtain, according to information which is of the first storage location and is provided by the write control unit (101), state information of the storage medium where the first storage location is located;
a first judging module (10312), configured to judge, according to the state information of the storage medium where the first storage location is located, whether the storage medium where the first storage location is located meets the energy saving control condition;
a second obtaining module (10313), configured to obtain an energy saving operation instruction corresponding to the energy saving control condition when a judging result of the first judging module is yes; and
a first sending module (10314), configured to send the first hard disk control instruction to the data storage device (12), so that the data storage device performs, on the storage medium where the first storage location is located, an energy saving control identified by the energy saving operation instruction, wherein the first hard disk control instruction comprises the energy saving operation instruction.

3. The data archive storage system according to claim 1 or 2, wherein the write control unit (101) comprises:
a first obtaining sub-unit (1011), configured to obtain the first storage location according to a storage location selection policy, wherein the storage location selection policy comprises selecting a storage location according to device state information of the data storage device, and the device state information of the data storage device comprises an identifier and state information of each storage medium of the data storage device; and
a first sending sub-unit (1012), configured to send the information of the first storage location to the hard disk control unit (103), send the information of the first storage location and the first file to the data storage device (12), so that the data storage device (12) stores the first file in the first storage location according to the information of the first storage location;

4. The data archive storage system according to any of the preceding claims, wherein the energy saving operation instruction corresponding to the energy saving control condition comprises: performing a power off control on a storage medium meeting the energy saving control condition, performing a dormancy control on a storage medium meeting the energy saving control condition, performing a speed reduction control on a storage medium meeting the energy saving control condition, performing a head suspension control on a storage medium meeting the energy saving control condition, or performing an entire power off control on a data storage device where a storage medium meeting the energy saving control condition is located.

5. A data archive access method, comprising:
receiving, by a storage control device, a storage control request;
when the storage control request is writing a first file into a data storage device, controlling, by a write control unit of the storage control device, the data storage device to write the first file into a first storage location of the data storage device, wherein the first file is a file to be stored, the data storage device comprises at least one storage medium, and the storage medium is a medium supporting random access of data; and
when the storage control request is reading a second file from the data storage device, obtaining, by a read control unit of the storage control device, an identifier of the second file and storage location information of the second file; and controlling, by the read control unit, the data storage device to read the second file from the second storage location according to the obtained identifier of the second file and storage location information of the second file, wherein the second file is a file to be read; wherein the method further comprises:
sending, by a hard disk control unit of the storage control device, a first hard disk control instruction to the data storage device, so that the data storage device performs an energy saving control on a storage medium where the first storage location is located;
wherein the sending, by the hard disk control unit of the storage control device, the first hard disk control instruction to the data storage device, so that the data storage device performs the energy saving control on the storage medium where the first storage location is located is performed when the storage medium where the first storage location is located meets an energy saving control condition; and
sending, by a hard disk control unit of the storage control device, a second hard disk control instruction to the data storage device when a storage medium where the second storage location is located is in a power-off or dormant state, so as to control the data storage device to perform a power on or dormancy recovery operation on the storage medium where the second storage location is located; and
the method further comprises performing, by the data storage device, the steps of:
receiving the first hard disk control instruction, and performing, according to the first hard disk control instruction, an energy saving control on the storage medium where the first storage location is located, and
receiving the second hard disk control instruction, and performing, according to the second hard disk control instruction, an energy saving operation such as the power on or dormancy recovery operation on the storage medium where the second storage location is located;
**characterised in that**:
the energy saving control condition comprise at least one of the following: a storage duration of the first file in the storage medium where the first storage location is located reaches a preset storage duration threshold, a number of access times of the first file in the storage medium where the first storage location is located reaches a preset threshold of the number of access times, a waiting duration after the storage medium where the first storage location is located is fully occupied reaches a preset waiting duration threshold and a preset control period is reached

6. The data archive access method according to claim 5, wherein when the storage medium where the first storage location is located meets the energy saving control condition, the sending, by the hard disk control unit, the first hard disk control instruction to the data storage device, so that the data storage device performs the energy saving control on the storage medium where the first storage location is located comprises:
after the write control unit controls the data storage device to write the first file into the first storage location, obtaining, by the hard disk control unit and according to information which is of the first storage location and is provided by the write control unit, state information of the storage medium where the first storage location is located;
judging, by the hard disk control unit and according to the state information of the storage medium where the first storage location is located, whether the storage medium where the first storage location is located meets the energy saving control condition; and
when a judging result is yes, obtaining, by the hard disk control unit, an energy saving operation instruction corresponding to the energy saving control condition, sending the first hard disk control instruction to the data storage device, so that the data storage device performs, on the storage medium where the first storage location is located, an energy saving control identified by the energy saving operation instruction, wherein the first hard disk control instruction comprises the energy saving operation instruction.

7. The data archive access method according to claim 5 or 6, wherein the controlling, by the write control unit of the storage control device, the data storage device to write the first file into the first storage location of the data storage device comprises:
obtaining, by the write control unit, the first storage location according to a storage location selection policy, wherein the storage location selection policy comprises selecting a storage location according to device state information of the data storage device, and the device state information of the data storage device comprises an identifier and state information of each storage medium of the data storage device; and
sending, by the write control unit, information of the first storage location to the hard disk control unit, and sending the information of the first storage location and the first file to the data storage device, so that the data storage device stores the first file in the first storage location according to the information of the first storage location;

8. The data archive access method according to any of the preceding claims, wherein the energy saving operation instruction corresponding to the energy saving control condition comprises: performing a power off control on a storage medium meeting the energy saving control condition, performing a dormancy control on a storage medium meeting the energy saving control condition, performing a speed reduction control on a storage medium meeting the energy saving control condition, performing a head suspension control on a storage medium meeting the energy saving control condition, or performing an entire power off control on a data storage device where a storage medium meeting the energy saving control condition is located.

## Patentansprüche

1. Datenarchiv-Speichersystem, umfassend: eine Speichersteuerungsvorrichtung (11) und eine Datenspeichervorrichtung (12),
wobei die Speichersteuerungsvorrichtung (11) umfasst:
eine Schreibsteuereinheit (101), die konfiguriert ist, um eine Datenspeichervorrichtung (12) zum Schreiben einer ersten Datei in einen ersten Speicherplatz der Datenspeichervorrichtung (12) zu steuern, wobei die erste Datei eine zu speichernde Datei ist, die Datenspeichervorrichtung (12) mindestens ein Speichermedium umfasst, und das mindestens eine Speichermedium ein Medium ist, das einen wahlfreien Zugriff auf Daten unterstützt; und
eine Lesesteuereinheit (102), die konfiguriert ist, um eine Kennung einer zweiten Datei und Speicherplatzinformationen der zweiten Datei zu erhalten, und die Datenspeichervorrichtung (12) gemäß der erhaltenen Kennung der zweiten Datei und der Speicherplatzinformationen der zweiten Datei zum Lesen der zweiten Datei aus einem zweiten Speicherplatz zu steuern, wobei die zweite Datei eine zu lesende Datei ist;
wobei die Datenspeichervorrichtung (12) umfasst:
eine Schreibeinheit (121), die konfiguriert ist, um die erste Datei unter der Steuerung der Schreibsteuereinheit (101) in den ersten Speicherplatz zu schreiben; und
eine Leseeinheit (122), die konfiguriert ist, um die zweite Datei unter der Steuerung der Lesesteuereinheit (102) aus dem zweiten Speicherplatz zu lesen;
wobei
die Speichersteuerungsvorrichtung (11) ferner umfasst:
eine Festplattensteuereinheit (103), wobei die Festplattensteuereinheit (103) umfasst: eine erste Festplattensteueruntereinheit (1031), die konfiguriert ist, um, wenn das Speichermedium, auf dem sich der erste Speicherplatz befindet, eine Energieeinsparungssteuerbedingung erfüllt, eine erste Festplattensteueranweisung an die Datenspeichervorrichtung (12) zu senden, sodass die Datenspeichervorrichtung eine Energieeinsparungssteuerung auf einem Speichermedium durchführt, auf dem sich der erste Speicherplatz befindet; und
eine zweite Festplattensteueruntereinheit (1032), die konfiguriert ist, um, wenn sich das Speichermedium, auf dem sich der zweite Speicherplatz befindet, in einem ausgeschalteten Zustand oder Ruhezustand befindet, eine zweite Festplattensteueranweisung an die Datenspeichervorrichtung (12) zu senden, wenn sich ein Speichermedium, auf dem sich der zweite Speicherplatz befindet, in einem ausgeschalteten Zustand oder Ruhezustand befindet, um so die Datenspeichervorrichtung (12) zur Durchführung eines Einschalt- oder Wiederinbetriebnahmevorgangs auf dem Speichermedium zu steuern, auf dem sich der zweite Speicherplatz befindet; und
die Datenspeichervorrichtung (12) ferner umfasst:
eine Steuerungsverarbeitungseinheit (123), die konfiguriert ist, um:
die erste Festplattensteueranweisung zu empfangen und gemäß der ersten Festplattensteueranweisung eine Energieeinsparungssteuerung auf dem Speichermedium durchzuführen, auf dem sich der erste Speicherplatz befindet, und die zweite Festplattensteueranweisung zu empfangen und gemäß der zweiten Festplattensteueranweisung einen Energieeinsparungsvorgang durchzuführen, wie etwa den Einschalt- oder Wiederinbetriebnahmevorgang auf dem Speichermedium, auf dem sich der zweite Speicherplatz befindet, **dadurch gekennzeichnet, dass**:
die Energieeinsparungssteuerbedingung mindestens eines der Folgenden umfasst: eine Speicherdauer der ersten Datei in dem Speichermedium, auf dem sich der erste Speicherplatz befindet, erreicht einen voreingestellten Speicherdauerschwellenwert; eine Anzahl von Zugriffszeiten der ersten Datei in dem Speichermedium, auf dem sich der erste Speicherplatz befindet, erreicht einen voreingestellten Schwellenwert für die Anzahl von Zugriffszeiten; eine Wartezeit, nachdem das Speichermedium, auf dem sich der erste Speicherplatz befindet, voll belegt ist, erreicht einen voreingestellten Wartezeitdauerschwellenwert; und ein voreingestellter Steuerzeitraum wird erreicht.

2. Datenarchiv-Speichersystem nach Anspruch 1, wobei die erste Festplattensteueruntereinheit (1031) umfasst:
ein erstes Erhaltungsmodul (10311), das konfiguriert ist, um, nachdem die Schreibsteuereinheit die Datenspeichervorrichtung zum Schreiben der ersten Datei in den ersten Speicherplatz ansteuert, gemäß Informationen, die von dem ersten Speicherplatz stammen und durch die Schreibsteuereinheit (101) bereitgestellt werden, Zustandsinformationen des Speichermediums zu erhalten, auf dem sich der erste Speicherplatz befindet;
ein erstes Beurteilungsmodul (10312), das konfiguriert ist, um gemäß der Zustandsinformationen des Speichermediums, auf dem sich der erste Speicherplatz befindet, zu bestimmen, ob das Speichermedium, auf dem sich der erste Speicherplatz befindet, die Energieeinsparungssteuerbedingung erfüllt;
ein zweites Erhaltungsmodul (10313), das konfiguriert ist, um eine Energieeinsparungsvorgangsanweisung gemäß der Energieeinsparungssteuerbedingung zu erhalten, wenn ein Beurteilungsergebnis des ersten Beurteilungsmoduls "Ja" ist; und
ein erstes Sendemodul (10314), das konfiguriert ist, um die erste Festplattensteueranweisung an die Datenspeichervorrichtung (12) zu senden, sodass die Datenspeichervorrichtung auf dem Speichermedium, auf dem sich der erste Speicherplatz befindet, eine Energieeinsparungssteuerung durchführt, die durch die Energieeinsparungsvorgangsanweisung identifiziert wird, wobei die erste Festplattensteueranweisung die Energieeinsparungsvorgangsanweisung umfasst.

3. Datenarchiv-Speichersystem nach Anspruch 1 oder 2, wobei die Schreibsteuereinheit (101) umfasst:
eine erste Erhaltungsuntereinheit (1011), die konfiguriert ist, um den ersten Speicherplatz gemäß einer Speicherplatzauswahlrichtlinie zu erhalten, wobei die Speicherplatzauswahlrichtlinie das Auswählen eines Speicherplatzes gemäß Vorrichtungszustandsinformationen der Datenspeichervorrichtung umfasst, und die Vorrichtungszustandsinformationen der Datenspeichervorrichtung eine Kennung und Zustandsinformationen von jedem Speichermedium der Datenspeichervorrichtung umfassen; und
eine erste Sendeuntereinheit (1012), die konfiguriert ist, um die Informationen des ersten Speicherplatzes an die Festplattensteuereinheit (103) zu senden, die Informationen des ersten Speicherplatzes und die erste Datei an die Datenspeichervorrichtung (12) zu senden, sodass die Datenspeichervorrichtung (12) die erste Datei gemäß der Informationen des ersten Speicherplatzes in dem ersten Speicherplatz speichert.

4. Datenarchiv-Speichersystem nach einem der vorhergehenden Ansprüche, wobei die Energieeinsparungsvorgangsanweisung, die der Energieeinsparungssteuerbedingung entspricht, umfasst: Durchführen einer Abschaltsteuerung auf einem Speichermedium, das die Energieeinsparungssteuerbedingung erfüllt, Durchführen einer Ruhezustandssteuerung auf einem Speichermedium, das die Energieeinsparungssteuerbedingung erfüllt, Durchführen einer Geschwindigkeitsreduzierungssteuerung auf einem Speichermedium, das die Energieeinsparungssteuerbedingung erfüllt, Durchführen einer Kopfaufhängungssteuerung auf einem Speichermedium, das die Energieeinsparungssteuerbedingung erfüllt, oder Durchführen einer kompletten Abschaltsteuerung auf einer Datenspeichervorrichtung, auf der sich ein Speichermedium befindet, das die Energieeinsparungssteuerbedingung erfüllt.

5. Datenarchiv-Zugriffsverfahren, umfassend:
Empfangen, durch eine Speichersteuerungsvorrichtung, einer Speichersteuerungsanforderung;
wenn die Speichersteuerungsanforderung eine erste Datei in eine Datenspeichervorrichtung schreibt,
Steuern, durch eine Schreibsteuereinheit der Speichersteuerungsvorrichtung, der Datenspeichervorrichtung zum Schreiben der ersten Datei in einen ersten Speicherplatz der Datenspeichervorrichtung, wobei die erste Datei eine zu speichernde Datei ist, die Datenspeichervorrichtung mindestens ein Speichermedium umfasst und das Speichermedium ein Medium ist, das einen wahlfreien Zugriff auf Daten unterstützt; und
wenn die Speichersteuerungsanforderung eine zweite Datei aus der Datenspeichervorrichtung liest,
Erhalten, durch eine Lesesteuereinheit der Speichersteuerungsvorrichtung, einer Kennung der zweiten Datei und von Speicherplatzinformationen der zweiten Datei; und Steuern, durch die Lesesteuereinheit, der Datenspeichervorrichtung, um die zweite Datei aus dem zweiten Speicherplatz gemäß der erhaltenen Kennung der zweiten Datei und der Speicherplatzinformationen der zweiten Datei zu lesen, wobei die zweite Datei eine zu lesende Datei ist;
wobei
das Verfahren ferner umfasst:
Senden, durch eine Festplattensteuereinheit der Speichersteuerungsvorrichtung, einer ersten Festplattensteueranweisung an die Datenspeichervorrichtung, sodass die Datenspeichervorrichtung eine Energieeinsparungssteuerung auf einem Speichermedium durchführt, auf dem sich der erste Speicherplatz befindet;
wobei das Senden, durch die Festplattensteuereinheit der Speichersteuerungsvorrichtung, der ersten Festplattensteueranweisung an die Datenspeichervorrichtung, sodass die Datenspeichervorrichtung die Energieeinsparungssteuerung auf dem Speichermedium durchführt, auf dem sich der erste Speicherplatz befindet, durchgeführt wird, wenn das Speichermedium, auf dem sich der erste Speicherplatz befindet, eine Energieeinsparungssteuerbedingung erfüllt; und
Senden, durch eine Festplattensteuereinheit der Speichersteuerungsvorrichtung, einer zweiten Festplattensteueranweisung an die Datenspeichervorrichtung, wenn ein Speichermedium, auf dem sich der zweite Speicherplatz befindet, in einem ausgeschalteten Zustand oder Ruhezustand befindet, um so die Datenspeichervorrichtung zum Durchführen eines Einschalt- oder Wiederinbetriebnahmevorgangs auf dem Speichermedium zu steuern, auf dem sich der zweite Speicherplatz befindet; und
das Verfahren ferner das Durchführen, durch die Datenspeichervorrichtung, der folgenden Schritte umfasst:
Empfangen der ersten Festplattensteueranweisung und Durchführen gemäß der ersten Festplattensteueranweisung einer Energieeinsparungssteuerung auf dem Speichermedium, auf dem sich der erste Speicherplatz befindet; und
Empfangen der zweiten Festplattensteueranweisung und Durchführen gemäß der zweiten Festplattensteueranweisung eines Energieeinsparungsvorgangs, wie etwa den Einschalt- oder Wiederinbetriebnahmevorgang auf dem Speichermedium, auf dem sich der zweite Speicherplatz befindet;
**dadurch gekennzeichnet, dass**:
die Energieeinsparungssteuerbedingung mindestens eines der Folgenden umfasst: eine Speicherdauer der ersten Datei in dem Speichermedium, auf dem sich der erste Speicherplatz befindet, erreicht einen voreingestellten Speicherdauerschwellenwert; eine Anzahl von Zugriffszeiten der ersten Datei in dem Speichermedium, auf dem sich der erste Speicherplatz befindet, erreicht einen voreingestellten Schwellenwert für die Anzahl von Zugriffszeiten; eine Wartezeit, nachdem das Speichermedium, auf dem sich der erste Speicherplatz befindet, voll belegt ist, erreicht einen voreingestellten Wartezeitdauerschwellenwert; und ein voreingestellter Steuerzeitraum wird erreicht.

6. Datenarchiv-Zugriffsverfahren nach Anspruch 5, wobei, wenn das Speichermedium, auf dem sich der erste Speicherplatz befindet, die Energieeinsparungssteuerbedingung erfüllt, das Senden, durch die Festplattensteuereinheit, der ersten Festplattensteueranweisung an die Datenspeichervorrichtung, sodass die Datenspeichervorrichtung die Energieeinsparungssteuerung auf dem Speichermedium durchführt, auf dem sich der erste Speicherplatz befindet, umfasst:
nachdem die Schreibsteuereinheit die Datenspeichervorrichtung zum Schreiben der ersten Datei in den ersten Speicherplatz steuert, Erhalten, durch die Festplattensteuereinheit und gemäß Informationen, die von dem ersten Speicherplatz stammen und durch die Schreibsteuereinheit bereitgestellt werden, von Zustandsinformationen des Speichermediums, auf dem sich der erste Speicherplatz befindet;
Beurteilen, durch die Festplattensteuereinheit und gemäß der Zustandsinformationen des Speichermediums, auf dem sich der erste Speicherplatz befindet, ob das Speichermedium, auf dem sich der erste Speicherplatz befindet, die Energieeinsparungssteuerbedingung erfüllt; und
wenn ein Beurteilungsergebnis "Ja" ist, Erhalten, durch die Festplattensteuereinheit, einer Energieeinsparungsvorgangsanweisung, die der Energieeinsparungssteuerbedingung entspricht, Senden der ersten Festplattensteueranweisung an die Datenspeichervorrichtung, sodass die Datenspeichervorrichtung auf dem Speichermedium, auf dem sich der erste Speicherplatz befindet, eine Energieeinsparungssteuerung durchführt, die durch die Energieeinsparungsvorgangsanweisung identifiziert wird, wobei die erste Festplattensteueranweisung die Energieeinsparungsvorgangsanweisung umfasst.

7. Datenarchiv-Zugriffsverfahren nach Anspruch 5 oder 6, wobei das Steuern, durch die Schreibsteuereinheit der Speichersteuerungsvorrichtung, der Datenspeichervorrichtung zum Schreiben der ersten Datei in den ersten Speicherplatz der Datenspeichervorrichtung umfasst:
Erhalten, durch die Schreibsteuereinheit, des ersten Speicherplatzes gemäß einer Speicherplatzauswahlrichtlinie, wobei die Speicherplatzauswahlrichtlinie das Auswählen eines Speicherplatzes gemäß Vorrichtungszustandsinformationen der Datenspeichervorrichtung umfasst, und die Vorrichtungszustandsinformationen der Datenspeichervorrichtung eine Kennung und Zustandsinformationen von jedem Speichermedium der Datenspeichervorrichtung umfassen; und
Senden, durch die Schreibsteuereinheit, der Informationen des ersten Speicherplatzes an die Festplattensteuereinheit und Senden der Informationen des ersten Speicherplatzes und der ersten Datei an die Datenspeichervorrichtung, sodass die Datenspeichervorrichtung die erste Datei gemäß den Informationen des ersten Speicherplatzes in dem ersten Speicherplatz speichert.

8. Datenarchiv-Zugriffsverfahren nach einem der vorhergehenden Ansprüche, wobei die Energieeinsparungsvorgangsanweisung, die der Energieeinsparungssteuerbedingung entspricht, umfasst: Durchführen einer Abschaltsteuerung auf einem Speichermedium, das die Energieeinsparungssteuerbedingung erfüllt, Durchführen einer Ruhezustandssteuerung auf einem Speichermedium, das die Energieeinsparungssteuerbedingung erfüllt, Durchführen einer Geschwindigkeitsreduzierungssteuerung auf einem Speichermedium, das die Energieeinsparungssteuerbedingung erfüllt, Durchführen einer Kopfaufhängungssteuerung auf einem Speichermedium, das die Energieeinsparungssteuerbedingung erfüllt, oder Durchführen einer kompletten Abschaltsteuerung auf einer Datenspeichervorrichtung, auf der sich ein Speichermedium befindet, das die Energieeinsparungssteuerbedingung erfüllt.

## Revendications

1. Système de stockage d'archives de données comprenant : un dispositif de commande de stockage (11) et un dispositif de stockage de données (12),
dans lequel le dispositif de commande de stockage (11) comprend :
une unité de commande d'écriture (101), configurée pour commander un dispositif de stockage de données (12) pour écrire un premier fichier à un premier emplacement de stockage du dispositif de stockage de données (12), dans lequel le premier fichier est un fichier qui doit être stocké, le dispositif de stockage de données (12) comprend au moins un support de stockage et le ou les supports de stockage sont un support prenant en charge un accès aléatoire de données ; et
une unité de commande de lecture (102), configurée pour obtenir un identifiant d'un second fichier et des informations d'emplacement de stockage du second fichier, et commander, en fonction de l'identifiant obtenu du second fichier et des informations d'emplacement de stockage du second fichier, le dispositif de stockage de données (12) pour lire le second fichier à partir d'un second emplacement de stockage, dans lequel le second fichier est un fichier qui doit être lu ;
dans lequel le dispositif de stockage de données (12) comprend :
une unité d'écriture (121), configurée pour écrire le premier fichier au premier emplacement de stockage sous la commande de l'unité de commande d'écriture (101) ; et
une unité de lecture (122), configurée pour lire le second fichier à partir du second emplacement de stockage sous la commande de l'unité de commande de lecture (102) ;
dans lequel
le dispositif de commande de stockage (11) comprend en outre :
une unité de commande de disque dur (103), dans lequel l'unité de commande de disque dur (103) comprend :
une première sous-unité de commande de disque dur (1031), configurée, lorsque le support de stockage, où le premier emplacement de stockage est situé, remplit une condition de commande d'économie d'énergie, pour envoyer une première instruction de commande de disque dur au dispositif de stockage de données (12) de telle sorte que le dispositif de stockage de données effectue une commande d'économie d'énergie sur un support de stockage où le premier emplacement de stockage est situé ;
et
une seconde sous-unité de commande de disque dur (1032), configurée, lorsque le support de stockage, où le second emplacement de stockage est situé, se trouve dans un état de mise hors tension ou inactif, pour envoyer une seconde instruction de commande de disque dur au dispositif de stockage de données (12) lorsqu'un support de stockage, où le second emplacement de stockage est situé, se trouve dans un état de mise hors tension ou inactif de sorte à commander le dispositif de stockage de données (12) pour effectuer une opération de mise sous tension ou de sortie d'état inactif sur le support de stockage où le second emplacement de stockage est situé ; et le dispositif de stockage de données (12) comprend en outre :
une unité de traitement de commande (123), configurée pour :
recevoir la première instruction de commande de disque dur et effectuer, en fonction de la première instruction de commande de disque dur, une commande d'économie d'énergie sur le support de stockage où le premier emplacement de stockage est situé et
recevoir la seconde instruction de commande de disque dur et effectuer, en fonction de la seconde instruction de commande de disque dur, une commande d'économie d'énergie, telle que l'opération de mise sous tension ou de sortie de l'état inactif, sur le support de stockage où le second emplacement de stockage est situé,
**caractérisé en ce que** :
la condition de commande d'économie d'énergie comprend au moins l'une des conditions suivantes : une durée de stockage du premier fichier dans le support de stockage, où le premier emplacement de stockage est situé, atteint un seuil de durée de stockage prédéfini, un nombre d'occurrences d'accès du premier fichier dans le support de stockage, où le premier emplacement de stockage est situé, atteint un seuil prédéfini du nombre d'occurrences d'accès, une durée d'attente, après que le support de stockage, où le premier emplacement de stockage est situé, est complètement occupé, atteint un seuil de durée d'attente prédéfini et une période de commande prédéfinie est atteinte.

2. Système de stockage d'archives de données selon la revendication 1, dans lequel la première sous-unité de commande de disque dur (1031) comprend :
un premier module d'obtention (10311), configuré, après que l'unité de commande d'écriture commande le dispositif de stockage de données pour écrire le premier fichier au premier emplacement de stockage, pour obtenir, en fonction d'informations qui proviennent du premier emplacement de stockage et sont fournies par l'unité de commande d'écriture (101), des informations d'état du support de stockage où le premier emplacement de stockage est situé ;
un premier module d'évaluation (10312), configuré pour évaluer, en fonction des informations d'état du support de stockage, où le premier emplacement de stockage est situé, si le support de stockage, où le premier emplacement de stockage est situé, remplit la condition de commande d'économie d'énergie ;
un second module d'obtention (10313), configuré pour obtenir une instruction d'opération d'économie d'énergie correspondant à la condition de commande d'économie d'énergie lorsqu'un résultat d'évaluation du premier module d'évaluation est oui ; et
un premier module d'envoi (10314), configuré pour envoyer la première instruction de commande de disque dur au dispositif de stockage de données (12) de telle sorte que le dispositif de stockage de données effectue, sur le support de stockage où le premier emplacement de stockage est situé, une commande d'économie d'énergie identifiée par l'instruction d'opération d'économie d'énergie, dans lequel la première instruction de commande de disque dur comprend l'instruction d'opération d'économie d'énergie.

3. Système de stockage d'archives de données selon la revendication 1 ou 2, dans lequel l'unité de commande d'écriture (101) comprend :
une première sous-unité d'obtention (1011), configurée pour obtenir le premier emplacement de stockage en fonction d'une politique de sélection d'emplacement de stockage, dans lequel la politique de sélection d'emplacement de stockage consiste à sélectionner un emplacement de stockage en fonction d'informations d'état de dispositif du dispositif de stockage de données et les informations d'état de dispositif du dispositif de stockage de données comportent un identifiant et des informations d'état de chaque support de stockage du dispositif de stockage de données ; et
une première sous-unité d'envoi (1012), configurée pour envoyer les informations du premier emplacement de stockage à l'unité de commande de disque dur (103), pour envoyer les informations du premier emplacement de stockage et le premier fichier au dispositif de stockage de données (12) de telle sorte que le dispositif de stockage de données (12) stocke le premier fichier au premier emplacement de stockage en fonction des informations du premier emplacement de stockage.

4. Système de stockage d'archives de données selon l'une quelconque des revendications précédentes, dans lequel l'instruction d'opération d'économie d'énergie correspondant à la condition de commande d'économie d'énergie consiste : à effectuer une commande de mise hors tension sur un support de stockage remplissant la condition de commande d'économie d'énergie, à effectuer une commande d'état inactif sur un support de stockage remplissant la condition de commande d'économie d'énergie, à effectuer une commande de réduction de vitesse sur un support de stockage remplissant la condition de commande d'économie d'énergie, à effectuer une commande de suspension de tête sur un support de stockage remplissant la condition de commande d'économie d'énergie ou à effectuer une commande de mise hors tension complète sur un dispositif de stockage de données où un support de stockage remplissant la condition de commande d'économie d'énergie est situé.

5. Procédé d'accès à des archives de données, consistant :
à recevoir, au moyen d'un dispositif de commande de stockage, une demande de commande de stockage ;
lorsque la demande de commande de stockage écrit un premier fichier dans un dispositif de stockage de données,
à commander, au moyen d'une unité de commande d'écriture du dispositif de commande de stockage, le dispositif de stockage de données pour écrire le premier fichier à un premier emplacement de stockage du dispositif de stockage de données, dans lequel le premier fichier est un fichier qui doit être stocké, le dispositif de stockage de données comprend au moins un support de stockage et le support de stockage est un support prenant en charge un accès aléatoire de données ; et
lorsque la demande de commande de stockage lit un second fichier à partir du dispositif de stockage de données,
à obtenir, au moyen d'une unité de commande de lecture du dispositif de commande de stockage, un identifiant du second fichier et des informations d'emplacement de stockage du second fichier ; et à commander, au moyen de l'unité de commande de lecture, le dispositif de stockage de données pour lire le second fichier à partir du second emplacement de stockage en fonction de l'identifiant obtenu du second fichier et d'informations d'emplacement de stockage du second fichier, dans lequel le second fichier est un fichier qui doit être lu ;
dans lequel
le procédé consiste en outre :
à envoyer, au moyen d'une unité de commande de disque dur du dispositif de commande de stockage, une première instruction de commande de disque dur au dispositif de stockage de données de telle sorte que le dispositif de stockage de données effectue une commande d'économie d'énergie sur un support de stockage où le premier emplacement de stockage est situé ;
dans lequel l'envoi, au moyen de la première unité de commande de disque dur du dispositif de commande de stockage, de la première instruction de commande de disque dur au dispositif de stockage de données de telle sorte que le dispositif de stockage de données effectue la commande d'économie d'énergie sur le support de stockage, où le premier emplacement de stockage est situé, est réalisé lorsque le support de stockage, où le premier emplacement de stockage est situé, remplit une condition de commande d'économie d'énergie ;
et
à envoyer, au moyen d'une unité de commande de disque dur du dispositif de commande de stockage, une seconde instruction de commande de disque dur au dispositif de stockage de données lorsqu'un support de stockage, où le second emplacement de stockage est situé, se trouve dans un état de mise hors tension ou inactif de sorte à commander le dispositif de stockage de données pour effectuer une opération de mise sous tension ou de sortie d'état inactif sur le support de stockage où le second emplacement de stockage est situé ; et
le procédé consiste en outre à effectuer, au moyen du dispositif de stockage de données, les étapes consistant :
à recevoir la première instruction de commande de disque dur et à effectuer, en fonction de la première instruction de commande de disque dur, une commande d'économie d'énergie sur le support de stockage où le premier emplacement de stockage est situé et
à recevoir la seconde instruction de commande de disque dur et à effectuer, en fonction de la seconde instruction de commande de disque dur, une opération d'économie d'énergie, telle que l'opération de mise sous tension ou de sortie de l'état inactif, sur le support de stockage où le second emplacement de stockage est situé,
**caractérisé en ce que** :
la condition de commande d'économie d'énergie comprend au moins l'une des conditions suivantes : une durée de stockage du premier fichier dans le support de stockage, où le premier emplacement de stockage est situé, atteint un seuil de durée de stockage prédéfini, un nombre d'occurrences d'accès du premier fichier dans le support de stockage, où le premier emplacement de stockage est situé, atteint un seuil prédéfini du nombre d'occurrences d'accès, une durée d'attente, après que le support de stockage, où le premier emplacement de stockage est situé, est complètement occupé, atteint un seuil de durée d'attente prédéfini et une période de commande prédéfinie est atteinte.

6. Procédé d'accès à des archives de données selon la revendication 5, dans lequel, lorsque le support de stockage, où le premier emplacement de stockage est situé, remplit la condition de commande d'économie d'énergie, l'envoi, au moyen de l'unité de commande de disque dur, de la première instruction de commande de disque dur au dispositif de stockage de données de telle sorte que le dispositif de stockage de données effectue la commande d'économie d'énergie sur le support de stockage où le premier emplacement de stockage est situé, consiste :
après que l'unité de commande d'écriture commande le dispositif de stockage de données pour écrire le premier fichier au premier emplacement de stockage, à obtenir, au moyen de l'unité de commande de disque dur et en fonction d'informations qui proviennent du premier emplacement de stockage et sont fournies par l'unité de commande d'écriture, des informations d'état du support de stockage où le premier emplacement de stockage est situé ;
à évaluer, au moyen de l'unité de commande de disque dur et en fonction des informations d'état du support de stockage où le premier emplacement de stockage est situé, si le support de stockage, où le premier emplacement de stockage est situé, remplit la condition de commande d'économie d'énergie ; et
lorsqu'un résultat d'évaluation est oui, à obtenir, au moyen de l'unité de commande de disque dur, une instruction d'opération d'économie d'énergie correspondant à la condition de commande d'économie d'énergie, à envoyer la première instruction de commande de disque dur au dispositif de stockage de données de telle sorte que le dispositif de stockage de données effectue, sur le support de stockage où le premier emplacement de stockage est situé, une commande d'économie d'énergie identifiée par l'instruction d'opération d'économie d'énergie, dans lequel la première instruction de commande de disque dur comprend l'instruction d'opération d'économie d'énergie.

7. Procédé d'accès à des archives de données selon la revendication 5 ou 6, dans lequel la commande, au moyen de l'unité de commande d'écriture du dispositif de commande de stockage, du dispositif de stockage de données pour écrire le premier fichier au premier emplacement de stockage du dispositif de stockage de données consiste :
à obtenir, au moyen de l'unité de commande d'écriture, le premier emplacement de stockage en fonction d'une politique de sélection d'emplacement de stockage, dans lequel la politique de sélection d'emplacement de stockage consiste à sélectionner un emplacement de stockage en fonction d'informations d'état de dispositif du dispositif de stockage de données et les informations d'état de dispositif du dispositif de stockage de données comportent un identifiant et des informations d'état de chaque support de stockage du dispositif de stockage de données ; et
à envoyer, au moyen de l'unité de commande d'écriture, des informations du premier emplacement de stockage à l'unité de commande de disque dur et à envoyer les informations du premier emplacement de stockage et le premier fichier au dispositif de stockage de données de telle sorte que le dispositif de stockage de données stocke le premier fichier au premier emplacement de stockage en fonction des informations du premier emplacement de stockage.

8. Procédé d'accès à des archives de données selon l'une quelconque des revendications précédentes, dans lequel l'instruction d'opération d'économie d'énergie correspondant à la condition de commande d'économie d'énergie consiste : à effectuer une commande de mise hors tension sur un support de stockage remplissant la condition de commande d'économie d'énergie, à effectuer une commande d'état inactif sur un support de stockage remplissant la condition de commande d'économie d'énergie, à effectuer une commande de réduction de vitesse sur un support de stockage remplissant la condition de commande d'économie d'énergie, à effectuer une commande de suspension de tête sur un support de stockage remplissant la condition de commande d'économie d'énergie ou à effectuer une commande de mise hors tension complète sur un dispositif de stockage de données où un support de stockage remplissant la condition de commande d'économie d'énergie est situé.
